# EUROPEAN PATENT SPECIFICATION

(11) **EP 0 598 104 B1**
(45) Date of publication and mention of the grant of the patent: **28.04.1999**
(21) Application number: 93914235.2
(22) Date of filing: 03.06.1993
(51) Int. Cl.: H04N 1/40

(54) **METHOD AND APPARATUS FOR REPRODUCING AN IMAGE WITH GRAY LEVEL PRINTING**
VERFAHREN UND GERÄT ZUR BILDREPRODUKTION MITTELS GRAUTONDRUCK
PROCEDE ET APPAREIL DE REPRODUCTION D'UNE IMAGE AVEC IMPRESSION DE NIVEAUX DE GRIS

(30) Priority: 05.06.1992 US 894857; 05.06.1992 US 894858; 05.06.1992 US 894859; 05.06.1992 US 895554; 05.06.1992 US 895555; 05.06.1992 US 895985; 05.06.1992 US 895986; 05.06.1992 US 895988
(43) Date of publication of application: 25.05.1994
(60) Divisional application: 98118918.6
(73) Proprietor: EASTMAN KODAK COMPANY, Rochester, New York 14650-2201 (US)
(72) Inventor: TAI, Hwai, Tzuu, Rochester, NY 14626 (US); NG, Yee, Seung, Fairport, NY 14450 (US)
(74) Representative: Blickle, K. Werner, Dipl.-Ing.
(86) International application number: US9305097
(87) International publication number: WO9326116

(56) References cited:
- EP-A- 0 095 716
- EP-A- 0 248 616
- EP-A- 0 292 292
- EP-A- 0 304 289
- EP-A- 0 370 271
- WO-A-92/03885
- FR-A- 2 497 043
- US-A- 4 251 837
- US-A- 4 347 523
- 1977 SID International symposium, Digest of Technical Papers; Society for Informa tion Display, Los Angeles (US), 1977 pages 124-125 K. Y. WONG et al.: "Adaptive Switching of Dispersed and Clustered Halftone Patterns for Bi-Level Image Rendition"
- I.B.M. JOURNAL OF RESEARCH AND DEVELOPMENT vol. 31, no. 1, January 1987, NEW YORK (US) pages 2 - 15 G. GOERTZEL ET AL. 'Digital halftoning on the IBM 4250 Printer'

## Description

### BACKGROUND OF THE INVENTION

The present invention relates to the field of encoding pictorial imagery for reproduction on display or printing systems, and more particularly to improvements in displays or printing apparatus that use gray level display/printing.

In the area of digital printing (the term "printing" is used to encompass both printing and displaying throughout), gray level has been achieved in a number of different manners. The representation of the intensity, i.e., the gray level, of a color by binary displays and printers has been the object of a variety of algorithms. Binary displays and printers are capable of making a mark, usually in the form of a dot, of a given, uniform size and at a specified resolution in marks per unit length, typically dots per inch. It has been common to place the marks according to a variety of geometrical patterns such that a group of marks when seen by the eye gives a rendition of an intermediate color tone between the color of the background (usually white paper stock) and total coverage, or solid density.

Continuous tone images contain an apparent continuum of gray levels. As an approximation to continuous tone images, pictorial imagery has been represented via binary halftone technologies. In order to record or display a halftone image with a scanning system, one picture element of the recording or display surface consists of a j x k matrix of subelements where j and k are positive integers. A halftone image is reproduced by printing the respective sub-elements or leaving them blank, in other words, by suitably distributing the printed marks.

Halftone image processing algorithms are evaluated in part, by their capability of delivering a complete gray scale at normal viewing distances. The capability of a particular process to reproduce high frequency rendition (fine detail) with high contrast modulation makes that procedure superior to one which reproduces such fine detail with lesser or no output contrast.

Another method of producing gray levels is provided by gray level printing. In such a method, each pixel has the capability to be rendered in one of several different dot sizes. The dot size for a pixel is a function of the exposure time provided an LED element (or other suitable printing device) corresponding to that pixel. The longer the exposure time, the more toner is attracted to that particular pixel.

There are two major concerns in rendering a continuous tone image for printing: (1) the resolution of image details, and (2) the reproduction of gray scales. In a binary halftone representation scheme, these two fundamental factors compete with each other. The more gray levels that are rendered, the larger is the halftone cell. Consequently, coarse halftone line screens are provided, with the attendant poor image appearance. Hence, a compromise is made in rendering between the selection of line resolution and gray scales in binary halftone printing. However, in gray level halftone printing, one can satisfy both resolution and gray level requirements. In gray level printing, the same number of addressable dots are present, and there is a choice of dot sizes from one dot-size of 1 bit/pixel to 16 different dot-sizes of 4 bits/pixel. An image could then be rendered with 133 line screens and 128 gray scales of higher quality image. Although providing higher image quality with respect to line resolution and tonal scales, gray level halftoning presents its own dot rendering issues.

The dot growth pattern of WO-A-92 03 885 as illustrated in Fig. 6 shows a minimum dot first created at the center pixel location of the cell (HS1) and the growth in gray level of the cell is by sequentially forming dots at other pixel locations while the center dot remains at the minimum size. This is a dispersal type of dot pattern growth which in certain printing applications provides an unstable dot structure and tends to provide grainy images.

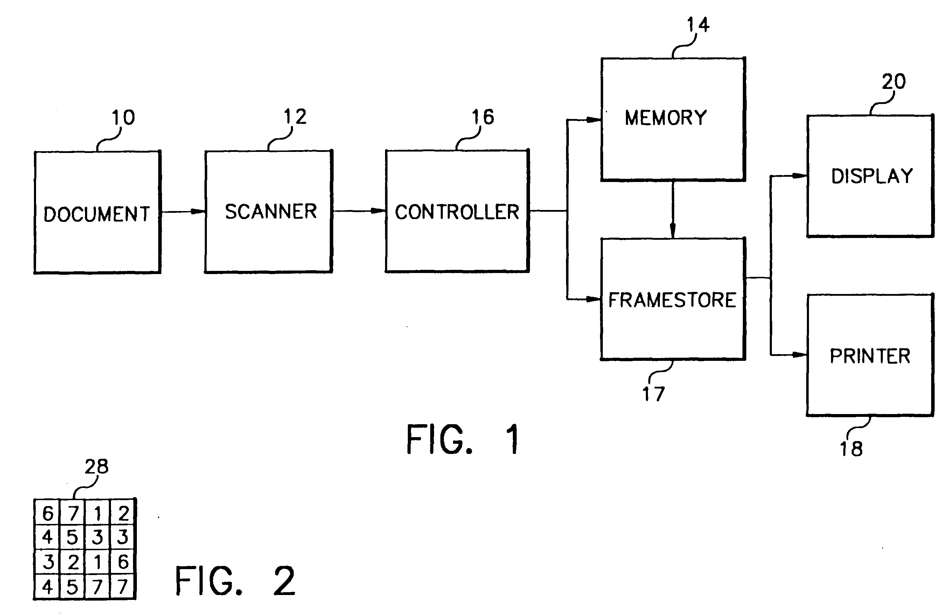

Document EP-A-0 304 289 is directed to a printer having a dot growth pattern that tends to also feature the dispersal of some growth to adjacent pixels. As indicated in Fig. 1 growth is to surrounding pixel locations before the central dot has grown beyond a minimum dot size. In addition surrounding pixel locations show dispersion of density before they have grown to a size beyond a minimum size.

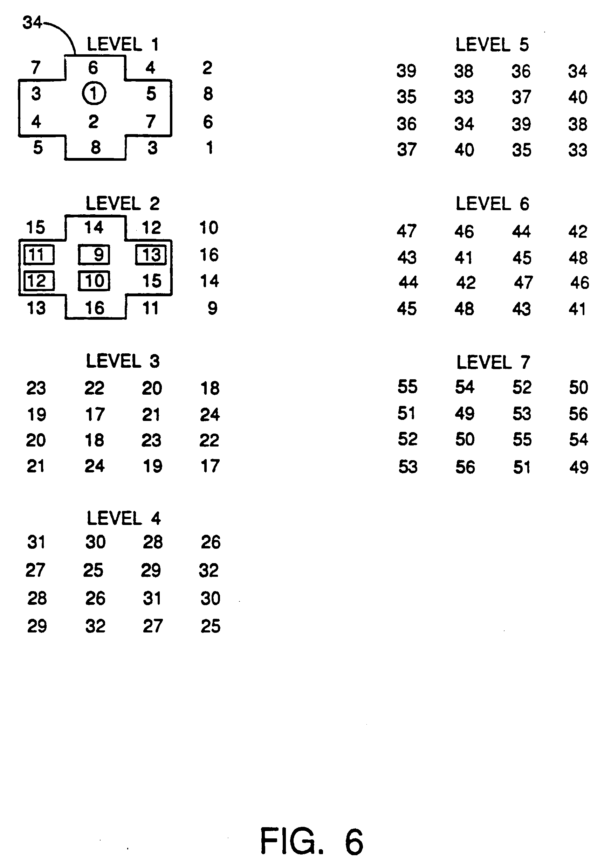

Document EP-A-0 292 292 is directed to an ink jet printer wherein four dot sizes are available by enabling the nozzle each of four times. As can be seen in Figs. 6 to 8 the dot growth patterns are dispersive ones wherein dot growth of plural pixel locations are together.

There is a need for an apparatus and a method for providing a screen for gray scale rendering that establishes a stable latent image structure, and renders more gray scales for an image, and with the process characteristics built into it so that the appearance of the dots are pleasing to the eye.

A problem also exists in the application of a gray level rendering technique to a document that contains different types of images: text, halftone, and continuous tone. These different types of images create different rendering problems, based on a trade-off between tone scales and detail resolution. For example, with text, the number of tone scales is not as important as providing a smooth text edge, whereas the opposite holds true for continuous tone images. Providing a single type of gray level halftone rendering technique to a document that contains two or more types of images may lead to the production of a document in which one or more of the different types of images are reproduced unsatisfactorily.

When scanning a document, image processing techniques have been applied to convert a gray scale image into an image representation which a printer can accept (either binary format or gray level format). In this scanning process, text areas, line drawing and halftone pictures are indistinguishable from each other, and all appear to be a gray scale image. An improper conversion process creates artifacts in the hardcopy such as a jagged boundary in the text area, or a Moire pattern in the halftone region. To overcome this, intelligent processes have been developed to segment the image into different regions of text, line drawing, and picture. Different conversion processes for the individual segments were then applied to these segments to restore the original document. However, these segmentation and conversion processes unduly complicate the digital copying process.

There is a need for a unified rendering method and apparatus using gray level printing that will satisfactorily reproduce an image that contains text, line drawing, halftone and/or continuous tone regions, with different gray dot representations selected for the specific regions. There is a need for a method and apparatus which does this without a need to "know" where is the text region, the halftone region or the continuous tone region, and which overcomes artifacts such as a jagged text boundary or a Moire pattern in the halftone.

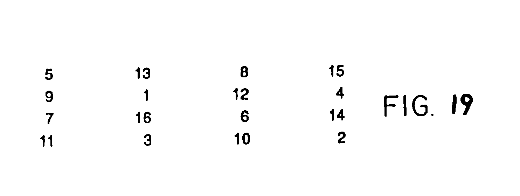

In gray level printing the exposure times are associated with different dot sizes. For example, with 3 bits/pixel, there can be 7 different exposure times (or intensity levels if intensity is varied rather than exposure duration), and thus 7 different dot sizes. A problem selecting the 7 exposure times from the continuous tone curve (which gives equal lightness change) can be recognized from Figure 19, which shows lightness of the overall gray level of a halftone vs. a step number of the halftone, for a mixed dot type halftone cell described later. As can be readily seen, there is a non-even lightness jump in some of the steps. If the unevenness of this lightness jump is too great, noticeable density contouring in the output print will occur.

The reason behind this lightness jump comes from the fact that pixels within a cell grow differently depending on their surroundings, so that the exposure time for a continuous type of system (when all surrounding pixels are on) cannot be simply selected and used for every pixel in a halftone cell employing a mixed dot type cell growth pattern.

There is thus also a need for a method and apparatus that reduces contouring by classifying pixels within a cell and modifying the exposure of the pixels according to this classification.

As indicated earlier, continuous-tone pictures can only be printed in binary form through a halftoning process. The halftone process breaks the picture into dots via a screen-like structure. Through the integration of the human visual system, a sensation of gray shades is achieved. Normally, increasing the dot resolutions (for example, 2000 dots per inch (dpi) - 3000 dpi or higher) and making the dots smaller are the way to produce a high quality picture (a continuous-tone like picture). However, it is not necessary to present the continuous tone photographic quality picture in such high image resolutions. For example, 400 dpi or 500 dpi printing resolutions with 8-bit to 12-bit gray scales are adequate for true continuous tone photographic quality printing. Such continuous tone printing systems (for example, the photographic film based process and the dye sublimation thermal based process) are on the market now. These are very expensive exposure system controls which deliver 8-bit to 12-bit gray scales. Those printing devices and exposure system controls currently use two designs: a current modulating laser intensity system or a time modulating laser exposure system.

Through human visual system study, it has been discovered that the human eye can't distinguish the shade changes (i.e., it looks like a continuous shade) at medium resolutions around 400 dpi - 600 dpi range with multi-bit (4 bits or 5 bits) image pixel information.

There is a need for a design of dot patterns and the rendering of images into 4 bits or 5 bits image representation, such that when the rendered images are reconstructed through the gray scale printing, the restored structure looks like a continuous tone picture.

In electrophotography, the toning process is based on the differential electrostatic force generated by the charge potential on the latent image. A well (i.e. satisfactorily) formed cluster type of charge-potential-well is therefore advantageous for developing a stable dot. Certain dot designs have a well formed potential well already built in, so that the rendered images will be less grainy. However, certain other dot designs will render a grainy image because there is no such well formed charge-potential-well for that dot structure on the latent image to stabilize the dot.

There is a need for an apparatus and method for providing a stable dot for a dot design that would normally not have a stable dot developed in the electrophotographic printing process.

### SUMMARY OF THE INVENTION

In accordance with a first aspect of the invention, there is provided a method of producing a gray level image according to claim 1.

In accordance with a second aspect of the invention, there is provided an apparatus for reproducing an original image according to claim 6.

Other objects, advantages and novel features of the present invention will become apparent from the following detailed description of the invention when considered in conjunction with the accompanying drawings.

### BRIEF DESCRIPTION OF THE DRAWINGS

Figure 1 shows a block diagram of an apparatus for reproducing an image, constructed in accordance with an embodiment of the present invention.

Figure 2 shows an example of a 4x4 cell with indications of gray level for each pixel.

Figure 3 illustrates an exemplary 3-bit gray halftone dot layout according to a full dot type embodiment of the present invention.

Figure 4 shows a cell with dots that have been formed.

Figure 5 illustrates an exemplary halftone dot mask.

Figure 6 shows a 3-bit gray halftone dot layout according to a partial dot type embodiment of the present invention.

Figure 7 shows a 3-bit gray halftone dot layout according to a mixed dot type embodiment of the present invention.

Figure 8 shows a 4-bit gray halftone dot layout according to a mixed dot type embodiment of the present invention.

Figure 9 illustrates a thresholding mask for a 4-bit gray halftone dot layout according to a mixed dot type embodiment of the present invention.

Figure 10 illustrates a thresholding mask for a 4-bit gray halftone dot layout according to a fixed threshold dot type embodiment of the present invention.

Figure 11 shows a method for unified image rendering in accordance with an embodiment of the present invention.

Figure 12 shows a tone reproduction control chart.

Figure 13 shows a method for unified image rendering in accordance with another embodiment of the present invention.

Figure 14 is a lightness vs. exposure time curve for gray level halftone of one type.

Figure 15 is a lightness vs. exposure time curve for gray level halftone of different type.

Figure 16 is a block diagram of a method for modifying gray levels using a classifier according to an embodiment of the present invention.

Figure 17 illustrates an example of a 4x4 classifier.

Figure 18 is a block diagram showing an alternative embodiment of the method for modifying gray levels using a classifier.

Figure 19 shows a Bayer dispersion dot template.

Figure 20 illustrates a 4-bit partial dot pattern set using the dot template of Figure 19.

Figure 21 shows a threshold pattern for gray scale rendering using the dot template of Figure 19 and the dot pattern set of Figure 20.

Figure 22 shows a cluster dot template.

Figure 23 illustrates a 4-bit partial dot pattern set using the dot template of Figure 22.

Figure 24 shows a threshold pattern for gray scale rendering using the dot template of Figure 22 and the dot pattern set of Figure 23.

Figure 25 is a basic block diagram of a gray scale rendering process in accordance with one aspect of the present invention.

Figure 26 is a flowchart of a method for imbedding dot structure in accordance with an embodiment of the present invention.

Figure 27 illustrates a cell before and after dot stabilitization according to the present invention.

Figure 28 shows a power spectrum of an output print of a black density patch with full dot type.

Figure 29 shows a power spectrum of an output print of a black density patch with partial dot type.

Figure 30 shows a power spectrum of an output print of a black density patch with mixed dot type.

Figure 31 shows contour suppression of every pixel.

Figure 32 illustrates a 282/inch (45 degree screen).

Figure 33 illustrates a 200/inch (90 degree screen).

Figure 34 shows a basic flow diagram of a descreening method in accordance with an aspect of the present invention.

Figure 35 shows the design of the descreening filter of the present invention.

Figure 36 is a flowchart of an embodiment of the descreening method of the present invention.

### DETAILED DESCRIPTION OF THE DRAWINGS

Figure 1 illustrates an apparatus which reproduces a document in accordance with the various aspects of the invention described herein. The document 10 can contain different types of images on the same document. For example, document 10 may contain both text and continuous tone areas, and may also contain halftone areas.

The document 10 is scanned in and digitized by a conventional scanner 12, which operates to provide digital signals representative of the densities of the areas of the document 10 corresponding to various pixels. These signals are sent to a memory (or buffer) 14. Under the direction of a controller 16, these signals may be modified and provided as gray level signals through a frame store 17 to a printer 18 and/or a display 20 for each pixel. The printer 18 and/or display 20 will then reproduce the document 10 by energizing each of the individual pixels according to the gray levels as modified (or not modified) by the controller 16. The printer may be a gray level LED printhead or a laser printer or other grey level exposure device. Alternatively, the printer may be an electrographic recording device that imagewise charges an electrostatic image supporting member. For exposure devices, the member may be photographic film or a photoconductive image supporting member.

The controller 16 of the present invention may include a computer that is programmed or hardwired in accordance with the teachings herein to carry out the various aspects of the invention. The controller operates to modify the gray level that is to be printed for a pixel in dependence on the local contrast. In providing a gray level signal for a specific pixel to be printed, the controller 16 will select between a "mixed dot" type rendering technique and a "fixed threshold" type rendering technique. Before describing the selection process, these two rendering techniques will now be discussed.

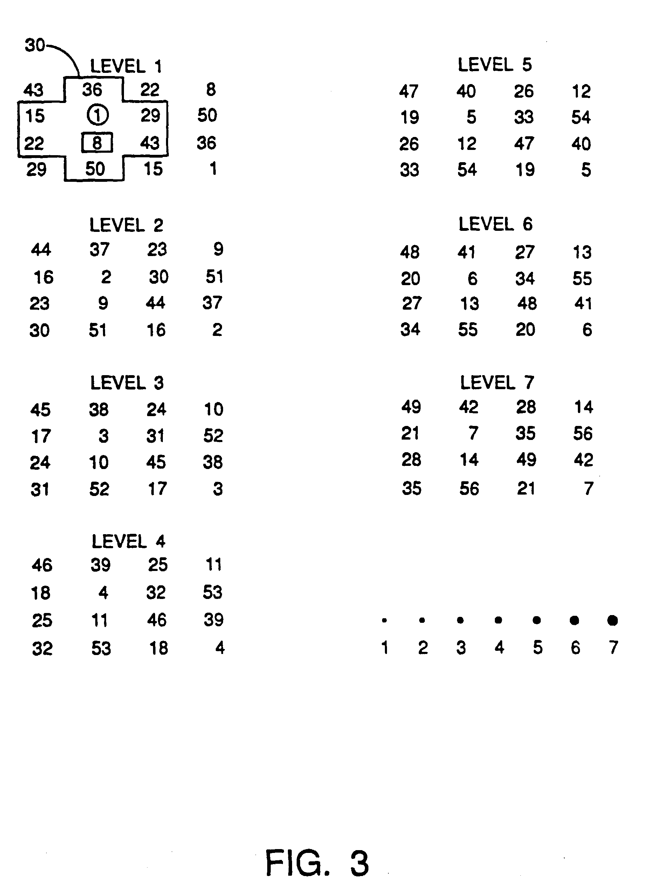

In gray level printing, each pixel has the capability to be rendered in several different dot sizes, and thus different gray levels. However, instead of simply providing each pixel with an independent gray level, several pixels may be organized together to form a superpixel, or cell. Each of the pixels in a cell is then provided with a gray level. The human visual response integrates the various gray levels of the individual pixels in the cell to a single perceived gray level for the cell. This is similar to the basic concept of binary halftoning. The number of tone scales for a cell is increased greatly, however, due to the number of different gray levels available for each pixel. For example, instead of only the two levels provided in binary halftoning for each pixel, eight levels can be provided with gray level printing for each pixel in a cell (3 bits/pixel). When the cell is made up of 4x4 pixels, for example, the gray level printing allows 121 different gray shades to be rendered for that cell. An example of a 4x4 cell 28 with numbers that represent gray levels for each pixel is shown in Figure 2.

The formation of the dots in the pixels of a cell can be performed in a number of different manners to achieve different desired results. The dots can be formed as "full" dot, "partial" dot, or "mixed" dot to provide gray level halftoning.

Figure 3 illustrates an example of a 3-bit gray halftone dot layout for a full dot type cell formation. Also illustrated are seven different pixel-dot sizes, corresponding to the sizes that each individual pixel-dot can obtain. There are 57 possible gray levels for the exemplary eight element cell 30 shown here. An example of the formation of a cell that is at gray level 12 will now be given.

The pixel circled in level 1, reference numeral 1, is formed to dot-size 1 in level 1. (Only one cell will be described, although the pixels of other cells are changed according to the same layout, as shown in Figure 3). The dot at this circled pixel grows larger and larger as the levels increase from level 1 to level 2 all the way to level 7. One can see that this pixel increases in value from 1 to 7 as the levels increase. If the desired gray level for the cell 30 was 7, then the formation of this cell would be completed once the circled pixel 1 has reached the dot-size of 7 in level 7. In this example, however, the gray level for the cell 30 is desired to be 12. At gray level 7, the circled pixel 1 has reached its maximum dot-size, so that a dot at another pixel within cell 30 must now start forming. This dot starts forming at the pixel indicated with a square around it in level 1, with the numeral 8.

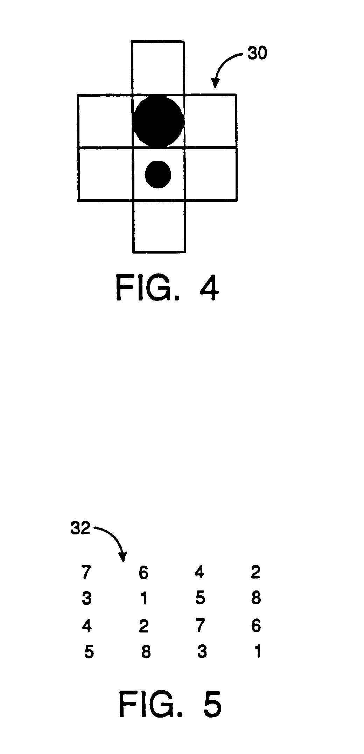

The dot formation process continues, with the dot at this second pixel growing larger and larger as the levels again increase from level 1 to level 5. The formation process stops at level 5, since the pixel has now reached the value of 12. The halftone cell 30 now contains, as seen in Figure 4, a dot of dot-size 7, and a dot of dot size 5. The extension of this formation process to 57 gray levels is easy to see from this example. Thus, to form a cell of gray level 55 it will be noted that gray level 55 is at Level 6 in Figure 3. All pixel locations in cell 30 that are less than 55 in Level 6 are grown to dot-size 7, whereas the pixel at location 55 is grown to dot size 6.

The full dot type process thus involves forming dots in a cell at the highest priority pixels to their maximum allowable dot-size before beginning the formation of the dots at the next highest priority pixels. An exemplary halftone dot mask 32 with pixel priorities indicated is shown in Figure 5. Different matrix sizes, cell shapes and priorities can be used for the cells than that illustrated in Figure 3, without departing from the spirit and scope of the present invention.

In the electrophotographic process, the full dot type formation process is favored because it forms stable dots and exhibits less granularity (halftone printing noise). Another method which carries more information detail than full dot, but at the cost of less stable dots, is the partial dot type, described below.

A 3-bit gray halftone dot layout for the partial dot type formation process is shown in Figure 6. In this process, the cell 34 is built by providing a dot of the same size to each pixel in the cell to the extent possible, before building up the dot at any particular pixel to the next larger size. Thus, for a gray level of 6 for the cell 34, the circled pixel in level 1 would have a dot formed at that pixel with a dot-size of 1, as would similarly pixel locations "2", "3", "4", "5" and "6". For larger gray levels, for example gray level 13, each of the pixels in the cell 34 would be built up to at least dot-size of 1. The pixels indicated with a square around them in level 2 would be built up to have a dot size of 2.

The partial dot formation process can thus be seen to spread out the information over the cell, and therefore carries more information detail than the full dot. It does suffer from less stable dots and more granularity, however.

The mixed dot type, discussed below, combines the merits of both the full dot and the partial dot types in gray level halftoning. A number of different processes can be provided to combine the full dot type and the partial dot type, with the specific mixed dot type being chosen based on which renders an image with more smoothness, less graininess, and more image details. Suggested strategies are: 1) build small stable dots in the highlight (toe) region; 2) keep tone response linear in the mid-tone region; 3) reduce dot structure in the shadow (shoulder) region and render more details. Based on these considerations and the teachings herein, a specific mixed dot type can be chosen by one of ordinary skill in the art to optimize stable dots, more image detail and less graininess.

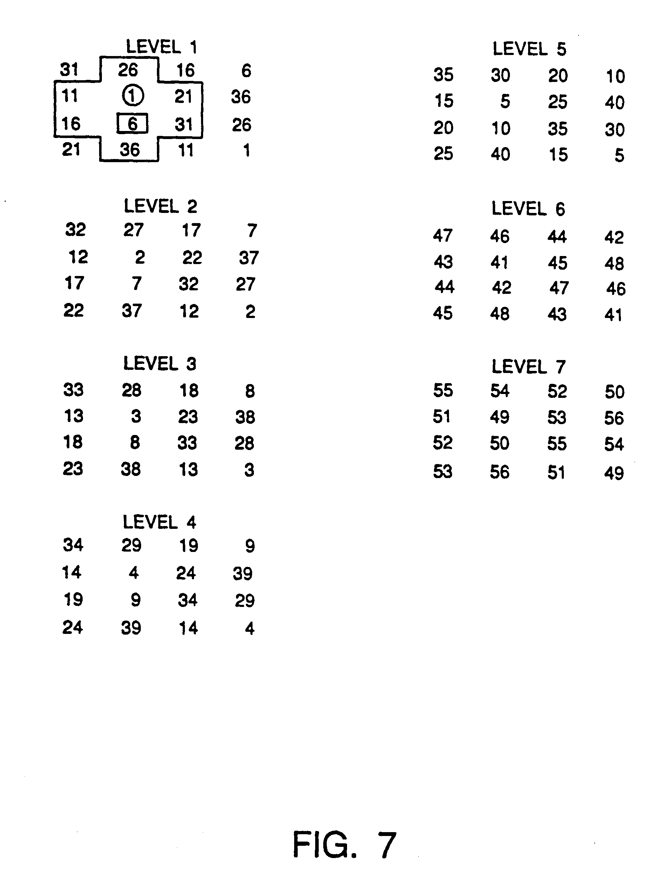

An example of a specific mixed dot type 3-bit gray halftone dot layout is illustrated in Figure 7. As can be seen, until gray level 41 is reached, the pixels are constrained from growing beyond dot-size of 5. The pixels grow in a full dot type process, with the pixel circled growing to a dot-size of 5, with the pixel that is squared then starting to grow in size. Once all of the pixels in the cell have attained a dot-size of 5, corresponding to gray level 40, the cell then increases in gray level by using a partial dot type process. In other words, each of the pixels in the cell must grow to a dot-size of 6 before any of the pixels begins growing to a dot-size of 7.

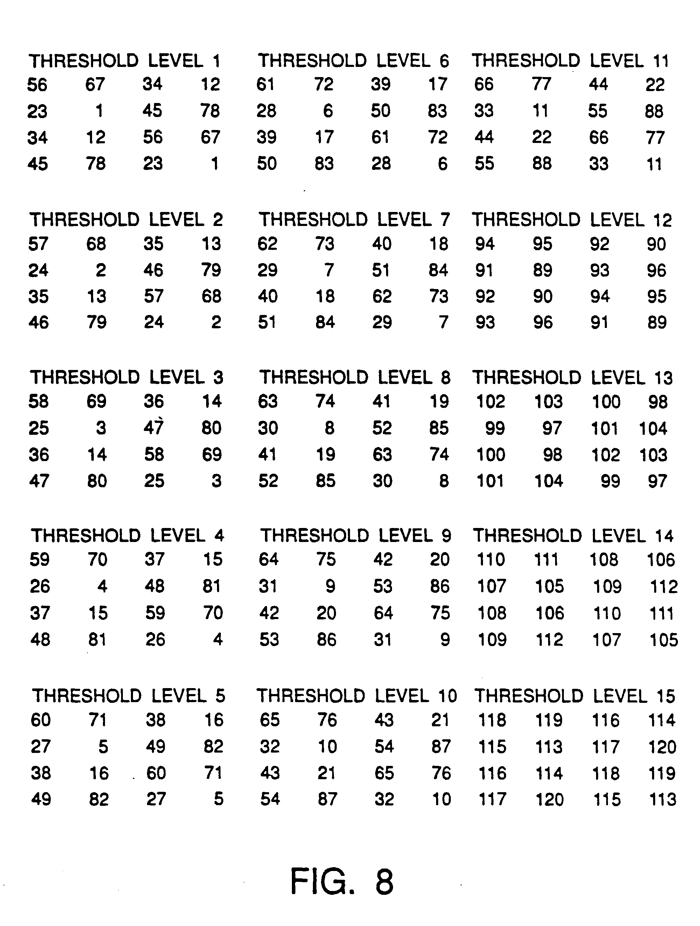

An example of a 4-bit gray halftone dot layout for mixed dot type is illustrated in Figure 8. The formation of the dots is the same in concept to that illustrated in Figure 7. Because there are 15 dot sizes available for each pixel, 121 gray levels for an eight element cell are obtainable.

In this 4-bits/pixel example of Figure 7, the highest priority pixel grows to dot-size 11 for corresponding cell gray levels 0 to 11. At cell gray level 12, the pixel of the next highest priority is then added and is of dot size 1. Similarly, for succeeding increases of cell gray level, the corresponding increases are made to the pixel of next highest priority until both said pixels are at gray level 11. Then further growth in cell density occurs by increasing the dot-size or density of the pixel at the third highest priority location and so on. When all pixels are at dot-size 11 (cell gray level 88) further increases in cell gray level are made by distributing the increases to the pixels in accordance with the growth pattern described for the partial dot approach.

Another type of rendering technique is a fixed threshold method. In this method each individual pixel is rendered with only limited tone scales. For example, 4 bits/pixel renders 16 different tone shades. The fixed threshold type renders the highest resolution among the various types, and an edge can be rendered more accurately down to each pixel. The fixed threshold type renders an image with even higher sharpness than the partial dot type since it is not limited by the cell size as is the partial dot type. The problem with the fixed threshold type is that it has less tone scale, so that a false contour could easily be seen in the rendered image. However, the fixed threshold type will provide excellent rendering results on text and halftone originals.

Although any one of the three dot types (full, partial or mixed) couyld be used to produce a satisfactory continuous tone image, the mixed dot type is the best choice for continuous tone rendering. For scanned text and halftone, the full dot type creates a screen structure in the background of text and a Moire pattern in the halftone. The mixed dot type also creates a screen structure in the background of text and creates a Moire pattern in the halftone, though weaker than that created by the full dot type. As stated above, the fixed threshold type renders well on both text and halftone. The unified rendering technique of the present invention uses both fixed threshold type and mixed dot types according to local image content so that text, halftone and continuous tone images are all reproduced well.

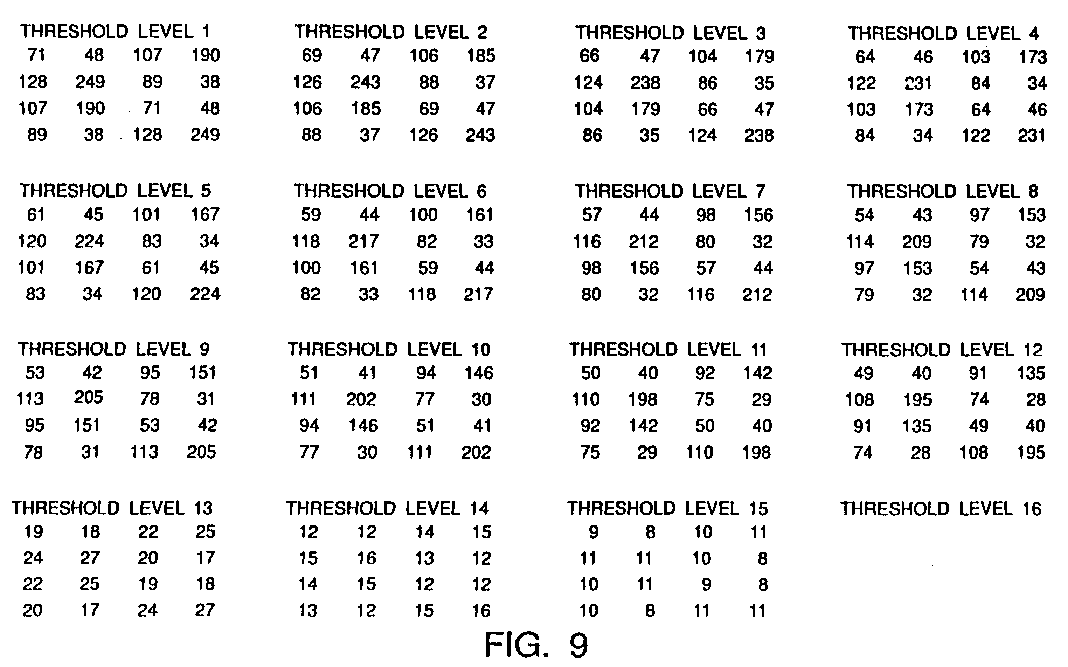

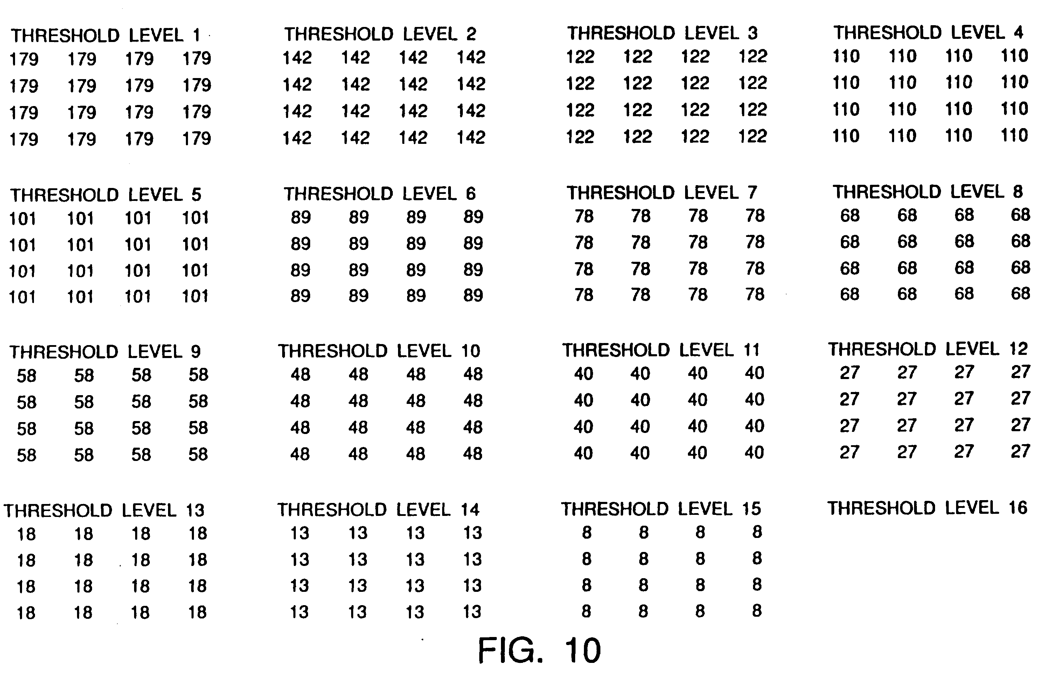

A 4-bit mixed dot type thresholding mask is illustrated in Figure 9, while the fixed threshold type thresholding mask is shown in Figure 10. These thresholding masks are derived from a dot layout, such as shown in Figure 8 for the mixed dot type. (The dot layout for the fixed threshold type is not shown, only the derived thresholding mask).

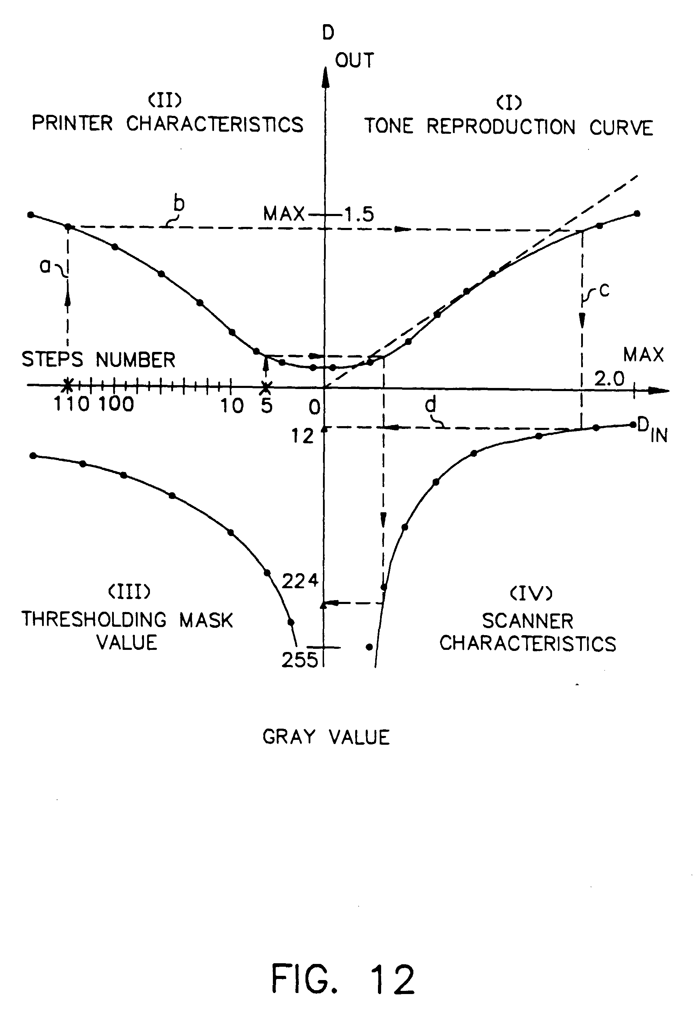

The thresholding masks are derived from the dot layouts using a tone reproduction control chart, such as shown in Figure 12. The tone reproduction chart has four quadrants. The first quadrant (I) contains the input and output density of a specific tone reproduction curve, which specifies the gamma or the contrast of the image to be reproduced. The second quadrant (II) captures the characteristics of the gray level printing process. The fourth quadrant (IV) preserves the characteristics of the scanner, which converts the density to a gray value. The third quadrant (III) maps gray values into gray steps linking the quadrants IV, I and II together.

To determine a thresholding mask value using this chart, the step number of the dot sequence in the dot layout of a cell is replaced by a gray value. For example, for step number 110 (found in threshold level 14 of Figure 8 for the mixed dot type) the mapping along arrows a, b, c, and d provides the gray value of 12. Similarly, for step number 5, the gray value maps to 224. (The values of the step number and the gray values are inversely related). In this manner, the thresholding masks of Figures 9 and 10 are derived.

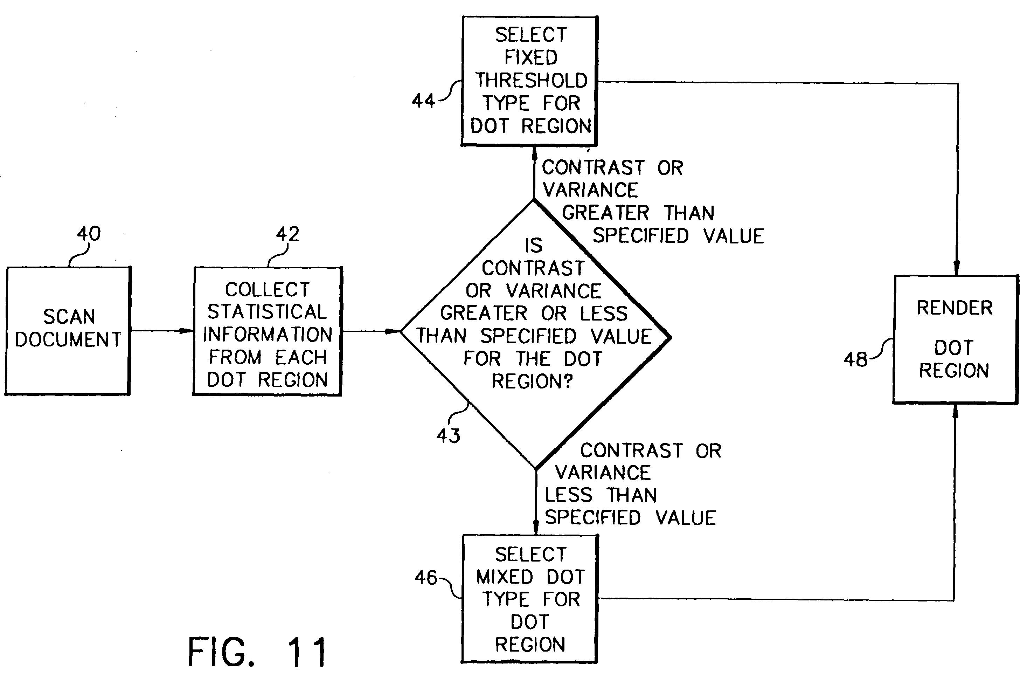

An exemplary embodiment of a method for unified image rendering is illustrated in Figure 11. A document 10 is scanned in step 40, using the scanner 12 as shown in Figure 1. The controller 16 collects statistical information from each dot region (e.g. 4x4 pixels) in step 42. This statistical information can include contrast, variance, variation or roughness, for exAlthough any one of the three dot types (full, partial or mixed) coample. The contrast is defined as the difference between local maximum intensity and local minimum intensity. The variation is defined as the average of the intensity difference between the nearest neighboring pixels. Techniques for finding the contrast or the variation are well known to those of ordinary skill in the art.

The present invention determines in step 43 (Figure 11) whether the contrast or variance of a dot region is greater than a specified value in step 43. If the contrast or variance is greater than the value, a fixed threshold type dot is selected for that dot region (step 44), otherwise, a mixed dot is selected (step 46). Finally, the image is reproduced by the printer 18 in step 48, with the specific dot region rendered in either the selected fixed threshold type or mixed type dot.

Thus, in the present invention, a fixed threshold type dot is rendered for text and halftone, since text and halftone are usually higher contrast in nature. This will not cause the Moire pattern in the halftone and will produce a smooth text boundary. The mixed dot, the best of the different dot types for continuous tone images, is rendered for the continuous tone region.

Collecting the statistical information and locally selecting the appropriate dot type from between a fixed threshold type and a mixed dot type provides superior reproduction of an image that contains different types of image regions, such as text, halftone and continuous tone regions.

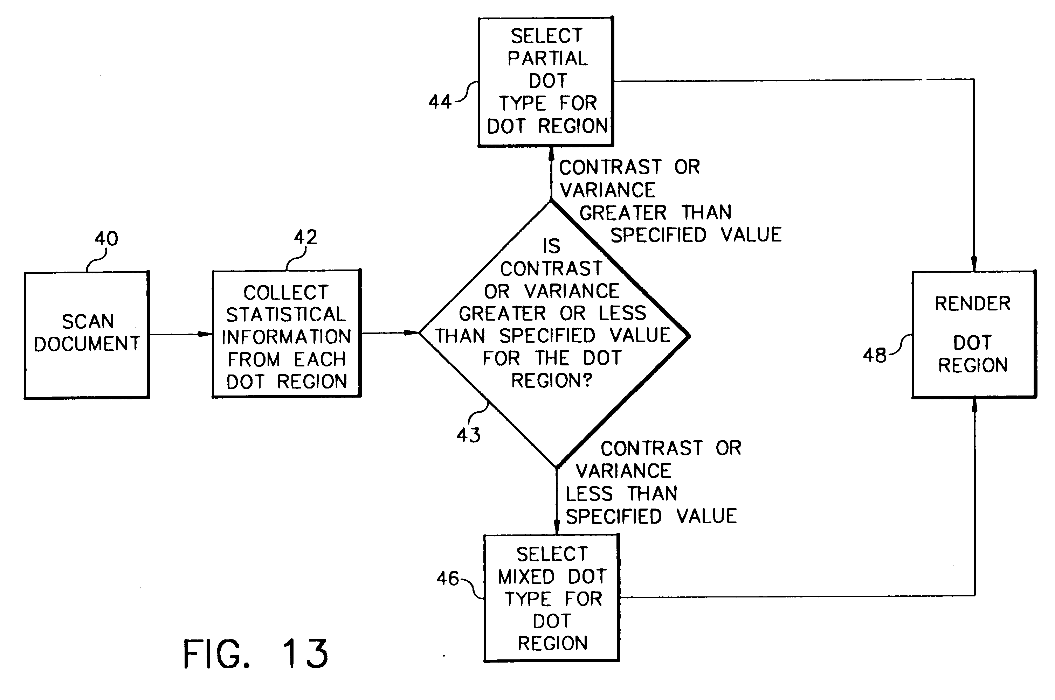

Another exemplary embodiment of a method for unified image rendering is illustrated in Figure 13. This method is the same as that shown in Figure 11, except that if the contrast or variance is greater than the value, a partial dot is selected for that dot region (step 44), otherwise, a mixed dot is selected (step 46).

Thus, in this embodiment of the present invention, a partial dot is rendered for text and halftone, since text and halftone are usually higher contrast in nature. As with the fixed threshold type, the partial dot type will not cause the Moire pattern in the halftone and will produce a smooth text boundary. The mixed dot, the best of the different dot types for continuous tone images, is still rendered for the continuous tone region in this embodiment of the present invention.

Collecting the statistical information and locally selecting the appropriate dot type from between a partial dot type and a mixed dot type provides superior reproduction of an image that contains differen types of image regions, such as text, halftone and continuous tone regions.

The unified rendition method described above achieves many quality goals to render a mixed type document. However, there are some noise problems associated in the halftone printing due to its rendered weak dots in the halftone picture. To stabilize the rendered dots in the halftone picture, a different screen structure is necessary to impose on the original halftone screen. However, this enhances the Moire pattern in the halftone picture. A compromise between the noise issues and the Moire pattern is necessary to minimize the problem in printing halftone pictures and other mixed types of images.

In accordance with the unified rendition method an original image may be scanned to produce a digitized image, a local structure analysis of the digitized image is performed and a descreening filter selectively applied to a region of the digitized image based on the results of the local structure analysis to remove a specific frequency of the digitized image caused by halftone screens. The descreening filter bypasses regions of the digitized image such that the bypassed regions remain unfiltered. The filtered regions and the bypassed regions are printed as a single, unified reproduction of the original image. This removes halftone screens from the image while maintaining the contrast of the text.

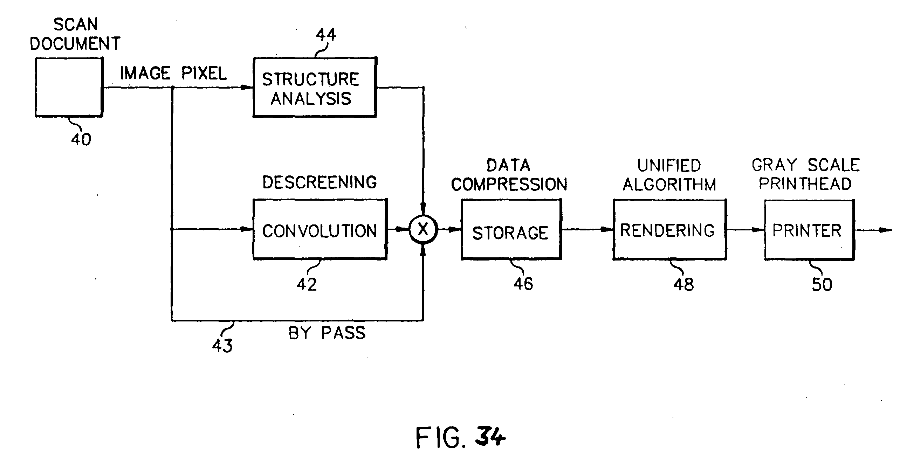

The approach of the present invention, a basic flow diagram of which is illustrated in Figure 34, further enhances the quality of the unified rendition method in dealing with a mixed type document. With reference now to Figure 34, a document is scanned in step 40, and this scanned document is processed through a descreening filter in step 42 which removes only a certain frequency caused by the halftone screen. The descreening filter can be resident in the scanner 12 or the controller 16 of Figure 1. The text blurring effects of this filter have been minimized for the specific designed filter characteristics.

A local structure analysis of the image is performed by the controller in step 44. The filter operation is applied selectively to the image region based on the results of this local structure analysis. The controller will not alter those pixels along the text border (see bypass 43) while it filters those pixels in a low contrast region and in a halftone dot region. In this way, the text contrast is maintained and the noise and the halftone screen are smoothed out. The processed image is then stored ( step 46 ) and rendered later through the unified method (step 48) and printed (step 50).

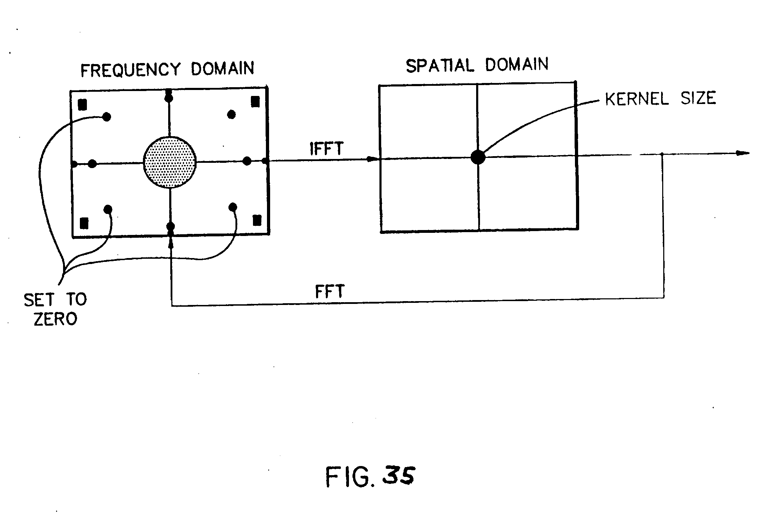

The design of the filter will now be described with reference to Figure 35. First, a frequency spectrum is selected in which the frequency response needs to be achieved. For example, in the present invention, it is desired to boost a certain frequency region while smoothing out another frequency region in the 256x256 size spectrum because of the scanner modulation transfer function which needs to be corrected in this manner. This frequency spectrum has a real number representation instead of a conventional complex number (a real part and an imaginary part) representation.

Second, the filter modifies the frequency strength around some frequency spots of the desired frequency spectrum to a minimum (i.e., approaching zero response) in a continuous but sharp slope change. These frequency spots are the locations of the halftone screen frequency. Other frequencies will not be altered.

Third, this modified frequency spectrum is then applied to an inverse FFT (Fast Fourier Transform) back to the spatial domain where image processing is operated. It has now a complex number representation in the spatial domain. An mxn window near the center (i.e., low frequency response region) of the real part of the spatial spectrum is cropped out. This window size is the designed filter size, for example a 5x5 filter kernel size. Due to this window cropping operation, certain regions in the spatial domain were excluded, in other words, coefficients are set to zero outside of the window. This cropping will modify some of the response shape in the desired frequency spectrum. Hence several feedback loops between the second step and the third step of previous described method are performed to enforce the strength of the screen frequency to be removed to the minimum. A final m x n window in the spatial domain is then chosen as the kernel of the descreening filter. This filter, when operated on the image, will then remove the specific frequency generated by the halftone screens. However, this filtering operation will also smooth out some contrast of text (the blurring effects) to a certain extent.

In the image descreening operation (step 42 of Figure 34), the filter is convolved with image pixels to produce a result. During the convolution operation, a structure analysis in the current window (for example, 5x5 sizes) is taken to make a decision whether it will convolve the image pixels or not. The original pixel is output instead of the convolved result if there is a text structure in the operated window. Hence, some regions with text structures are maintained in the original pixel values while other regions with halftone structures are convolved with a descreening filter.

The image descreening operation makes a determination that a region is halftone or text, or is low or high contrast. Both text and halftone structure are high contrast, but their local structures are different. For example, text as normally presented has a high contrast transition across its border. One side has a high pixel value while the other side (in vertical direction or in horizontal direction) has a low pixel value. If the pixel value difference from one side to the other side is greater than a certain threshold, it is determined to be a high contrast window. Otherwise, it is determined to be a low contrast window. If there is a consistent transition in the high contrast window such that one side has high values while the other side has low values, it is assumed that a text structure is in this window. If there is no consistent transition in the window and it causes a saddle point in the window, a halftone structure is assumed. This classification strategy based on the image structure makes about 95% - 98% of correct decisions on text. Only a few percentage errors are made which is due to a small font of text whose body has a similar size to the window. In this situation, the structure may not be clearly defined. However, this small percentage error does not cause a problem of blurring in the normal size of text. Hence, an original image can be reproduced so as to maintain its text contrast in the text region while its screen structure is smoothed out in the halftone region and some noise is filtered out in the low contrast region.

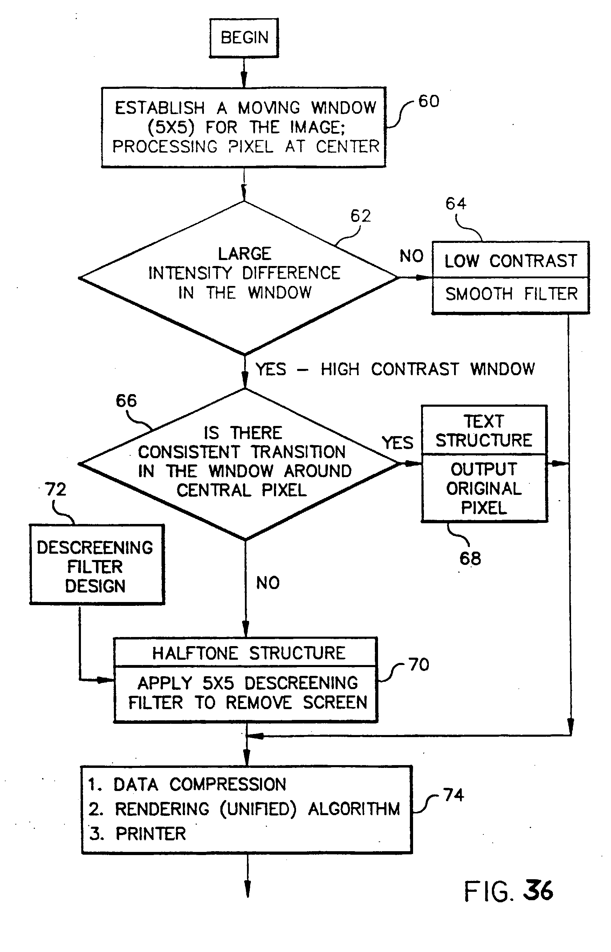

With reference now to Figure 36, there is shown a more detailed flow chart of the process of descreening. In step 60, a moving window (such as a 5x5 window) is established for the image, with the pixel being processed at the center of this image. In step 62, it is determined whether there is a large intensity difference in the window. If there is not a large intensity difference, then the windowed region is a low contrast region, so that a smoothing filter operation to remove noise is applied in step 64, and these filtered pixels are provided to step 74 to be stored (compressed), rendered, and printed. A simple smooth filter that can be used is a weighted average operated with 3x3 or 5x5 window size.

When a large intensity difference is detected in step 62, the window is determined to be a high contrast window. The consistency of the transition within the window around the central pixel is then evaluated in step 66. If there is a consistent transition, then the window is considered to contain text structure and the original pixel is provided as an output in step 68.

When there is not a consistent transition in the window around the central pixel, the structure in the window is considered to be halftone structure, and the 5x5 descreening filter is applied to remove the screen in step 70. Briefly stated again, in the filtering operation, the image is Fourier transformed into the frequency domain and then some specific frequency content (such as 133, 150, or 200 lines per inch or respectively 5.24, 5.91 or 7.87 lines per mm screens) are removed. This modified Fourier image spectrum is then transformed back to the spatial image domain to complete the removal of the halftone screen. After being descreened, the image pixels are provided to step 74 for final processing.

The design of the descreening filter can be performed "on-line" as indicated by step 72, or it can be already provided. However, this is computationally slow, and it is preferred to operate the filter design off-line and only perform convolution in the halftone window structures on-line.

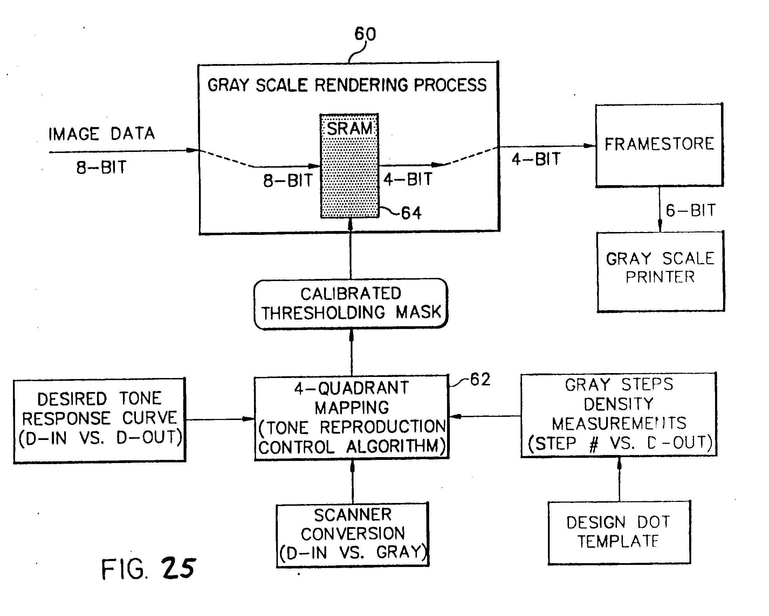

A simplified block diagram illustrating the gray scale rendering process is provided in Figure 25 and reference will now be made to elements described in Figure 25. Eight-bit image data is input to the digital halftone process block 60, which also receives signals relating to a calibrated thresholding mask that is created. The tone reproduction block 62 performs the 40-quadrant mapping illustrated in Figure 12 to create a threshold pattern such as shown in Figure 9 and described below. The tone reproduction block receives as inputs the desired tone response curve, the gray steps density measurements, and the scanner converstion and generates a mapping from step number to gray code value output as the calibrated thresholding mask.

The digital halftoning process block 60 converts the input pixel value into output exposure levels through the thresholding value setting at each pixel location in the cell. This can be implemented by a SRAM 64 lookup table that receives the thresholding mask. An image with a reduced bit-depth of four bits in the output of the digital halftoning process block 60. The 4-bit image is provided to a framestore and can then be printed by a 6-bit gray scale printer. (Other information such as 2-bit pixel classification information can be added to the 4-bit image data from the framestore.)

The generation of the threshold mask will now be described. A 4-bit mixed dot type thresholding mask is illustrated in Figure 9. This thresholding mask is derived from a dot layout, such as shown in Figure 8 for the mixed dot type, using the tone reproduction control chart, as shown in Figure 12. The tone reproduction chart has four quadrant. The first quadrant (I) contains the input and output density of a specific tone reproduction curve, which specifies the gamma or the contrast of the image to be reproduced. The second quadrant (II) captures the characteristic of the gray level printing process. The fourth quadrant (IV) preserves the characteristics of the scanner, which converts the density to a gray value. The third quadrant (III) maps gray values into gray steps linking the quadrants IV, I and II together.

To determine a thresholding mask value using this chart, the step number of the dot sequence in the dot layout of a cell is replaced by a gray value. For example, for step number 110 (found in dot level 14 of Figure 8 for the mixed dot type) the mapping along arrows a, b, c, and d provides the gray value of 12. Similarly, for step number 5, the gray value maps to 224. (The values of the step number and the gray values are inversely related). In this manner, the thresholding masks of Figure 9 is derived.

The thresholding mask is used to determine what the gray level of an output pixel should be given corresponding to its input pixel gray value. Assume, for example, that the input image pixel at location (1,1) of the 4x4 matrix cell of Figure 9 has a gray value of 56. The 15 thresholding values at the (1,1) location of the 4x4 cell are:
71, 69, 66, 64, 61, 59, 57, 54, 53, 51, 50, 49, 19, 12 and 9.

Since the input image pixel has a gray value of 56, which is between the two threshold values 57 and 54, the output gray level 7 is given to that pixel.

The layouts described above used a 4x4 cell template, and renders a picture with a 45 degree orientation, 141 screen frequency with 121 gray levels. The present invention also can provide a screen layout using a 6x6 cell template which will render a picture with 45 degree, 189 lines per inch (7.44 lines per mm) type screens at 400 dpi (15.74 dots per mm) resolution, and can produce a maximum of 181 gray levels for the 4-bit image, although it will normally render 156 gray levels. The increase in the number of gray levels and the higher screen frequency provide the present invention with successful picture rendering results.

In the electrophotographic process, a stable latent image structure needs to be formed. Accordingly, in another aspect of the present invention, several gray levels at first contribute so as to stabilize the line structure, as can be seen in the following.

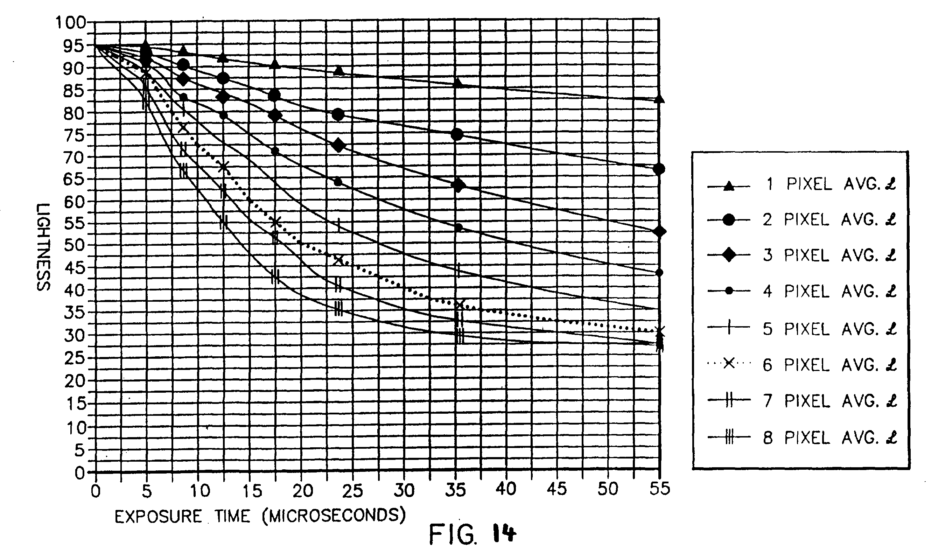

Description will now be made of still another embodiment of the present invention. With reference to Figures 14-18, it has been found experimentally that if it is assumed that:
R = Rₚ + A_{D} {f(t) - R_{P}}, where R_{P} is the reflectance of the paper base, A_{D} is the toned dot area/unit area and f(t) is the reflectance of the toned area as a function of exposure time (t) for a continuous tone patch and R is the reflectance of the halftone patch, then for more than 5 pixels in a cell that are turned on, A_{D} approaches 1 (the continuous tone case). This assumption is true only for a mixed dot of a specified type of 141/inch screen (at 45 degree angle) with a 400 dpi system. If the number of pixels within a cell (assume one cell has 8 pixels in this case) that are turned on is less than 5, then A_{D} < 1 and A_{D} increases from 0 to 1 with respect to a function that is related to the perimeter of the dot/unit area.

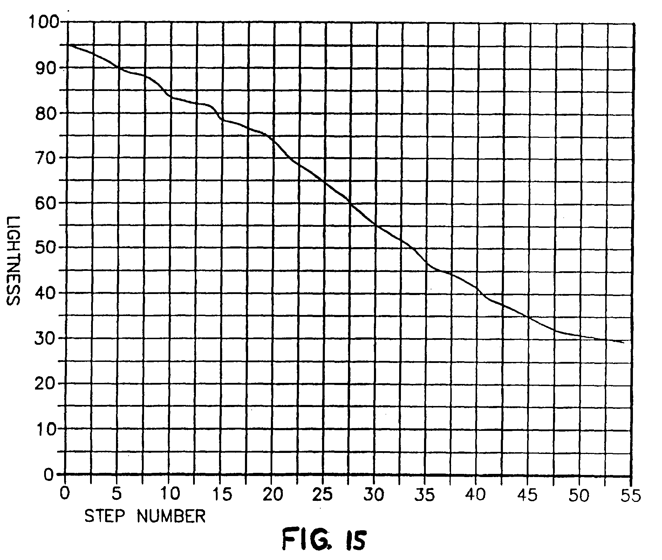

This indicates that with a lower number of pixels turned on in a cell, A_{D} (the dot area) increases and f(t), which is related to the density within a pixel, decreases as a function of exposure t. If the number of pixels within a cell that is supposed to be turned on in a gray level mixed dot is more than 5, then the halftone behaves like a continuous tone system. In other words, A_{D} = 1 and R almost follows the predicted curve of f(t) for a continuous tone system (see Figure 14). However, when using a mixed dot type, the lightness vs. exposure time curve exhibits non-even lightness jump in some steps (Figure 15). If the unevenness of the lightness jump is too much, this is noticed in contouring. Accordingly, this aspect of the present invention uses a different set of exposure times (in each gray level) for pixels that are isolated in a cell (a "low density region") than those pixels that are grouped together with other pixels in a cell (a "high density region").

The printhead of the printer 18 (Figure 1) may be a 6 bits/pixel gray level printhead. This may provide 40 uniformly corrected gray levels per pixel. In the present invention, only 3 bits or 4 bits per pixel are used to identify the gray level image data of the pixel so as to provide a device independent approach in printing. By using the halftone structural information, it is possible to produce a more even lightness jump between steps.

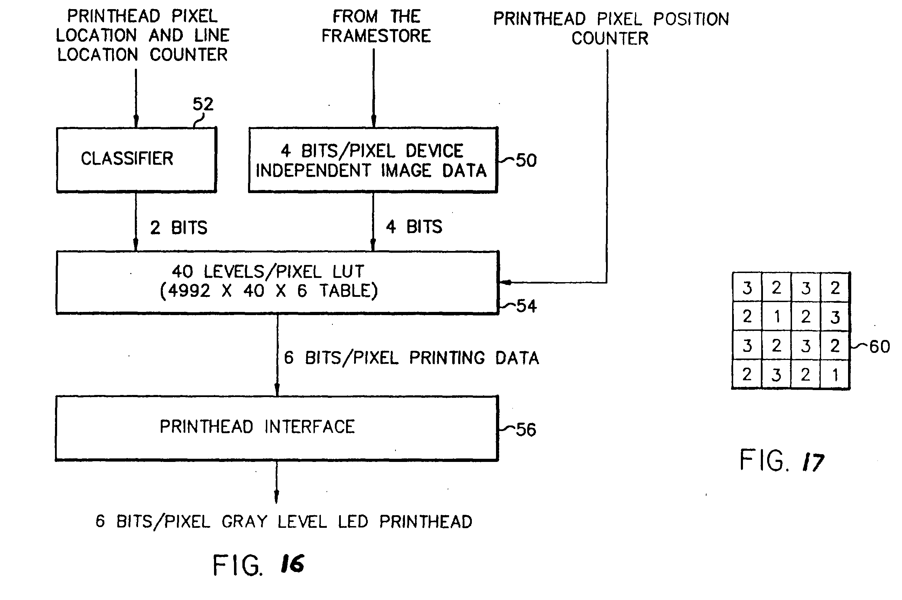

Figure 16 illustrates a flow chart for converting the device independent 4-bits/pixel image data to 6 bits/pixel gray level exposure time (or intensity) data (see in this regard, WO 91/10311). In addition to the 4 bit/pixel image data received from the frame store 17 in step 50, the printer 18 receives 2-bit classification information that identifies which pixel location and line location inside a halftone cell is being addressed. This information is generated by a classifier in step 52 which essentially indicates whether the pixel is in the center of a cell or on the periphery of the cell by the generation of a 2-bit sub-address.

The 2-bit sub-address containing structural information is combined with the 4-bits of image information to act as an address for a 40 levels/pixel look up table (LUT). The printhead pixel location in the line is provided to address which one of the 4992 pixels in a full wide printhead for which the pixel is supposed to extract the 40 levels of information. The output from the LUT is 6 bits/pixel printer information that is sent to the printhead in step 56. Although the above description assumes that the classification and the LUT are resident on the printer 18, it should be apparent to one of ordinary skill in the art that this process can also be performed by the controller 16 (Figure 1).

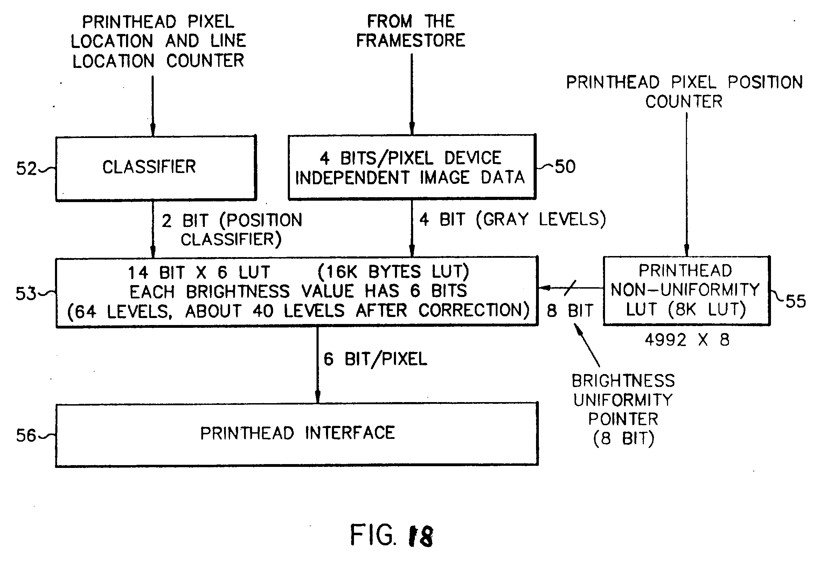

Figure 18 illustrates another embodiment for use with the present invention. Instead of using the single LUT 54 of Figure 11 11, two LUT's are used. The first LUT 55 is a non-uniformity brightness LUT (8K bytes). The second LUT 53 is a 14-bit address LUT that provides the correct exposure for each pixel when provided with gray value input and position classifier input. The non-uniformity LUT 55 can be an 8K byte SRAM, for example.

The brightness of the LED elements is sorted into 256 "bins" so that a better usage of the non-uniformity range of an LED is used. The pixel counter points to each individual element which then outputs its brightness bin (1 of 256). This eight-bit brightness bin acts as an index pointer to the 14-bit LUT 53, which can be a 14-bit x 8 SRAM - 16K bytes LUT. The 14-bit LUT 53 has the rest of the LUT address (6 bits) from the 4-bit gray levels input and the 2-bit position classifier. Although there are theoretically 64 levels for each pixel, due to the nonuniformity of the printhead, there are only approximately 40 real levels that exist after non-uniformity correction for some elements.

An example of a classifier is shown in Figure 17, which illustrates a 4x4 classifier 60. In this example, there are 3 designated classes of pixels within a cell. The first class is a pixel within the center of a cell (1). The second class are those pixels which surround the center pixel (2). The third class are those pixels which may overlap pixels in the surrounding halftone dots (3). The 2-bit sub-address provides information sufficient for three classifications.

Class 3 pixels are essentially very much like continuous tone, so that one can use the exposure times for the continuous tone curve for exposure (the 8 pixels curve) that was illustrated in Figure 14. For the single pixel of class 1, it is better to use a higher exposure time, such as the 1 pixel curve of Figure 14, to achieve the same lightness change. For the pixels of class 2, the effect is made more intermediate, near the 4 pixels curve of Figure 14. These exposure values are stored in the LUT, so that once the pixel location in a halftone cell is classified by the classifier, a different exposure level is provided by the LUT to achieve a more even halftone lightness jump.

As an example, for a pixel of class 1, the exposure level may be (a). If the pixel next to the first one is class 2, and would have an exposure level of (a) if standing alone, this second pixel of class 2 will be assigned an exposure level of (b), which will be lower than (a), to achieve an equivalent change in lightness in the halftone. When all the pixels in a cell have been classified and provided with an exposure level based on that classification within a cell, there will be 16 equivalent gray level outputs per pixel irrespective of the pixel location in the gray level halftone cell. These 16 equivalent gray levels have been provided from the 40 available levels after the correction for the location of the pixel in the cell.

In accordance with still another embodiment of the present invention has reduced the bit-depth from 8-bits to 4-bits, so that a compression or data packing is achieved. This rendition goal, however, is not the same as that of data compression. In data compression, it is mainly for storage/transmission purposes which later expand the compressed image to the original image form without visual loss of information. The result of data packing in the multi-bit rendering of the present invention benefits the throughput of the system and the bandwidth of the data transfer.

The dispersion dot type which is often used in binary halftone rendering may be extended to a multi-bit dot pattern. For gray scale printing, the gray scale dot designs "full", "partial", and "mixed" dot types have been defined above. Each dot type has its own tonal characteristics and texture patterns. With the proper choice of dot template (i.e., the optimal Bayer dot pattern or the cluster dot pattern), pixel bit-depth (i.e., 4-bit or 5-bit per pixel), and the "partial" dot type structure, a set of gray dot patterns is generated that will create a continuous tone look image.

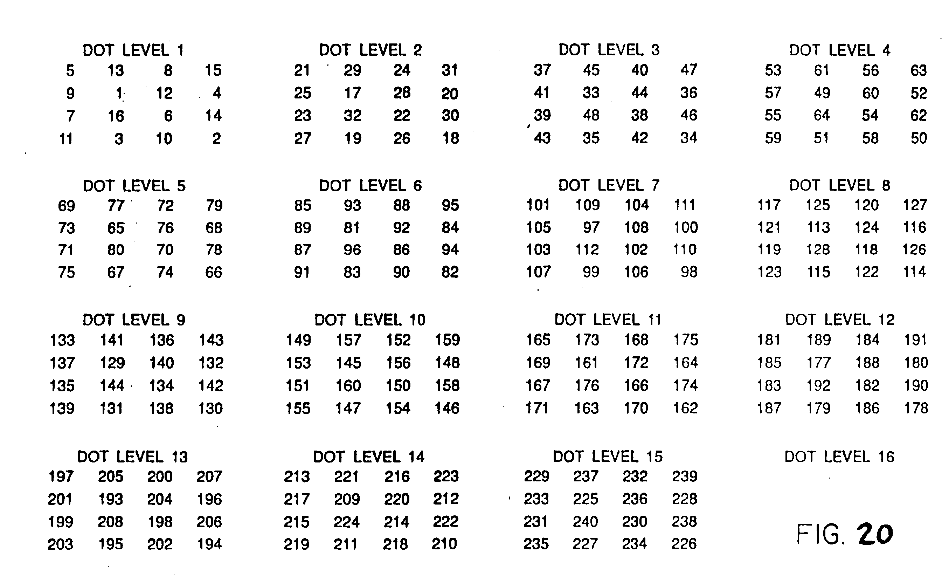

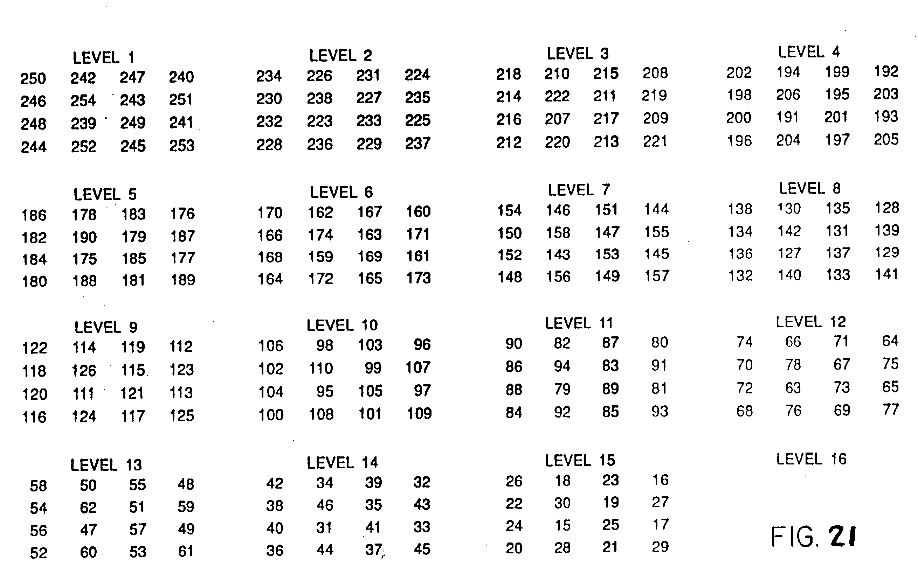

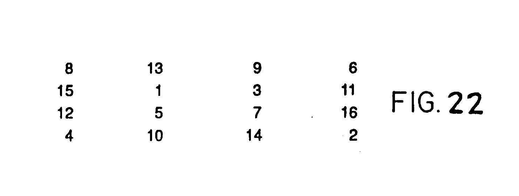

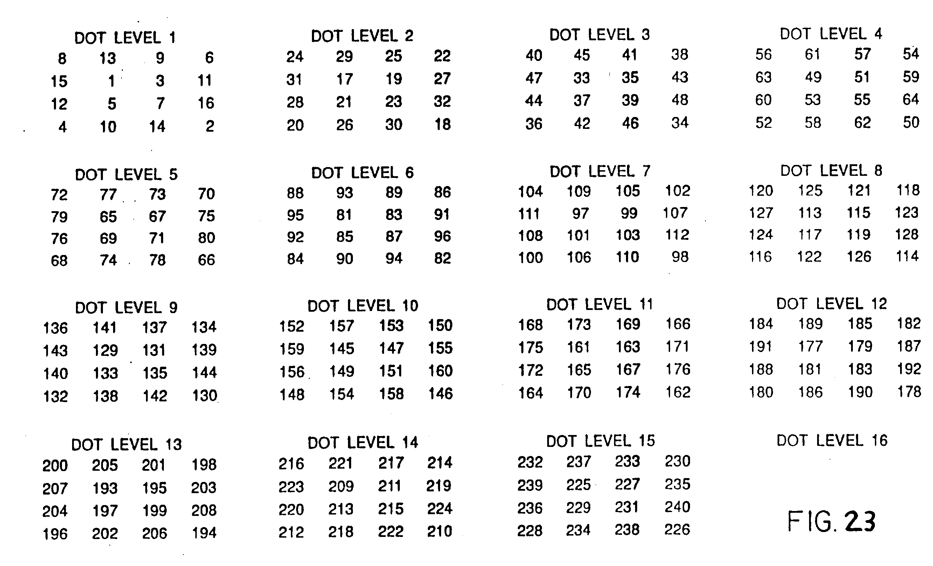

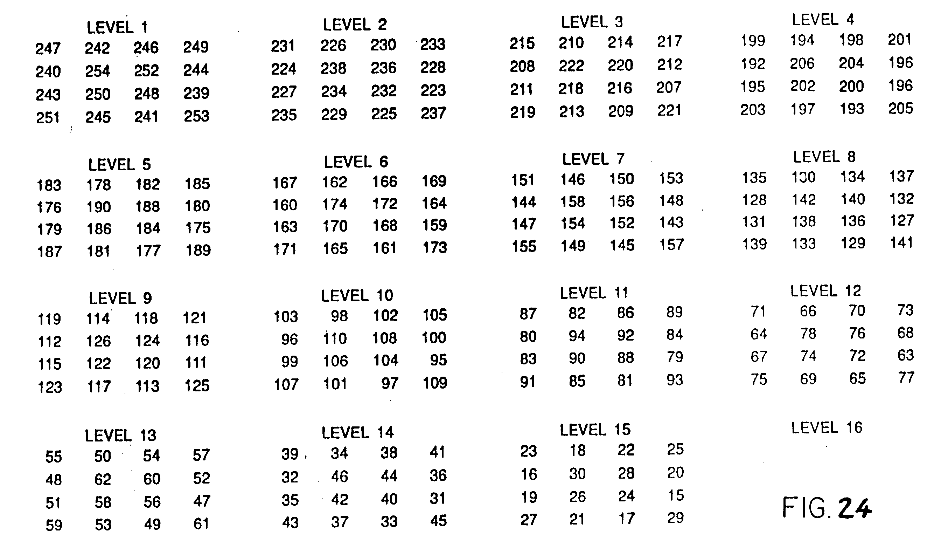

For example, a Bayer dispersion dot template is illustrated in Figure 19, and the 4-bit partial dot pattern set gray dot pattern in Figure 20. The thresholding pattern for gray scale rendering obtained from the patterns of Figure 20 by the 4-quadrant tone reproduction process are illustrated in Figure 21. Another example, a cluster dot pattern dot template is illustrated in Figure 22, and the 4-bit partial dot pattern set gray dot pattern in Figure 23. The thresholding pattern for gray scale rendering obtained from the patterns of Figure 23 by the 4-quadrant tone reproduction process are illustrated in Figure 24.

The generation of the threshold mask patterns of Figures 21 and 24 will be described. These thresholding masks are derived from the dot layouts, such as shown in Figures 20 and 23, respectively, using a tone reproduction control chart, such as shown in Figure 12. The tone reproduction chart has four quadrants. The first quadrant (I) contains the input and output density of a specific tone reproduction curve, which specifies the gamma or the contrast of the image to be reproduced. The second quadrant (II) captures the characteristic of the gray level printing process. The fourth quadrant (IV) preserves the characteristics of the scanner, which converts the density to a gray value. The third quadrant (III) maps gray values into gray steps linking the quadrants IV, I and II together.

To determine a thresholding mask values of Figure 21 using this chart, the step number of the dot sequence in the dot layout of a cell is replaced by a gray value. For example, for step number 110 (found in dot level 7 of Figure 20 for the partial dot pattern) the mapping along arrows a, b, c, and d provides, in this example, the gray value of 145 (not shown in Figure 12 but see Figure 21, level 7). Similarly, for step number 5 (found in dot level 1 in Figure 20), the gray value maps to 250 (not shown in Figure 12 but see Figure 21, level 1). (The values of the step number and the gray values are inversely related). In this manner, the thresholding masks of Figures 21 and 24 are derived.

The thresholding mask is used to determine what the gray level of an output pixel should be given corresponding to its input pixel gray value. Assume, for example, that the input image pixel at location (1,1) of the 4x4 matrix cell of Figure 21 has a gray value of 125. The 15 thresholding values at the (1,1) location of the 4x4 cell are:
250, 234, 218, 202, 186,170, 154, 138, 122, 106, 90, 74, 58, 42 and 26.

Since the input image pixel has a gray value of 125, which is between the two threshold values 138 and 122, the output gray level 8 is given to that pixel.

A digital halftoning process (or "gray scale rendering process") converts the image into a multi-bit image representation with the thresholding values of either Figure 21 or Figure 24, depending on which dot template is used. This multi-bit image has a continuous-tone look structure with a weak dot screen imbedded in it. A continuous-tone look image is then reconstructed from the multi-bit rendered image through a gray scale printer. The constructed images have no visual screen structure. Hence, a continuous tone picture printing is achieved through the multi-bit image rendition method.

A simplified block diagram illustrating the gray scale rendering process of the present invention is provided in Figure 25. Eight-bit image data is input to the digital halftone process block 60, which also receives signals relating to the calibrated thresholding mask that has been created as in Figures 21 and 24. The tone reproduction block 62 performs the 4-quadrant mapping illustrated in Figure 12 to produce threshold masks from the dot layouts. The tone reproduction block receives as inputs the desired tone response curve, the gray steps density measurements, and the scanner conversion, and generates a mapping from step number of a dot layout to a gray code value output of the calibrated thresholding mask.

The digital halftoning process block 60 converts the pixel value into output exposure levels through the thresholding value setting at each pixel location in the cell. This can be implemented by a SRAM 64 lookup table that receives the thresholding mask. An image with a reduced bit-depth of four bits is the output of the digital halftoning process block 60. This 4-bit image is provided to a framestore and can then be printed by a 6-bit gray scale printer. (Other information such as 2-bit pixel classification information, can be added to the 4-bit image data from the framestore).

With the above described process, an image that looks like a continuous tone picture is provided using a reduced (4-bits) image representation and gray scale printing.

The electrophotographic printing process involves: electrostatically charging, exposure, developing (or toning), transfer to a receiver sheet such as paper or plastic, and image fixing stages. Due to its unique toning process which is based on the differential electrostatic force generated by the charge potential on the latent image, a well (i.e, satisfactorily) formed cluster type of charge-potential-well is advantageous for developing a stable dot. Such a well (i.e., satisfactorily) formed potential-well is already built in to the mixed-dot and the full dot types of dot designs described above. Hence, the rendered images are visually less grainy. However, it is not true as an image rendered through the partial dot structure. The image looks grainy. This is because there is no such well formed charge-potential-well for the partial dot structure on the latent image to stabilize the dot. There is a similar effect in error diffused gray scaled images. Therefore, an imbedded controlled dot structure in error diffused gray scale image or partial dot rendered image will stabilize the dot. Furthermore, the imbedded structure can be in either dot form or line form. The rendered images are more pleasing with the controlled structures added in.

An error diffusion algorithm, for example, may be one method of imbedding dot structure in gray scale images during the rendering process. A number of known different error diffusion algorithms could be used in the present invention, such as shown in "An Adaptive Algorithm for Spatial Gray Scale", by Flord and Steinberg, Proc. SID, Vol. 17/2, pp. 75-77 and "Digital Halftoning" by Ulichney. Accordingly, the specifics of an error diffusion algorithm will not be further described here.

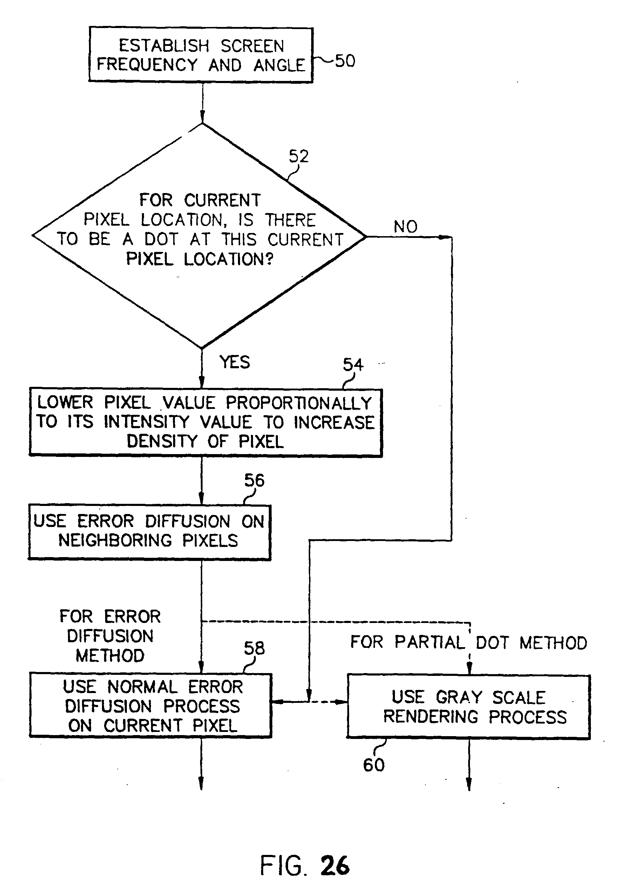

In the first step (50 in Figure 26) of the error diffusion method, the screen frequency and the angle are determined in order to decide what are the imbedded dot structures; i.e. which dots are the dots which will be stabilized. This can be as simple as a periodic screen structure in dot or line form. The structure could be, for example, 45 degree lines with 141 lines-per-inch screens at 400 dpi resoluition. Hence, when the current pixel is along these lines, this dot is determined to be a dot that is to be stabilized. Such a determination of pixels that will be stabilized is easy to perform in pixel processing. The imposed screen structure can be selected by a designer, but should not be distracting when viewing. Therefore, the periodicity or a template can be determined that is similar to the dot design procedure of a normal halftoning method.

In the next step (52), during the error diffusion process, it is determined for a corresponding location on the template of a current pixel whether a controlled dot should be laid down or not. If a controlled dot should be layed down, the current pixel value will be lowered proportionally according to its intensity value. Otherwise, it will proceed normally as error diffusion does by jumping to step 58 and use the normal error diffusion process on the current pixel. With the partial dot method (as shown in dashed lines), if a controlled dot should not be laid down, step 60 is performed so that gray scale rendering process such as that shown in Figure 25 is used on the current pixel.

The purpose of the adjustment on those specific locations is that on this current pixel, more light will be exposed (i.e., the pixel-dot will be slightly darker in the Neg/Pos electrophotographic process) than its original. This current pixel then will act as a stabilized center for the neighboring rendered pixels. The amount of adjustment on each pixel could be determined experimentally from the process latitude (i.e., it may be adjusted in two or few more exposure steps on those specific locations according to the process). The amount of the adjustment is dependent on the process conditions such as the toner size, developing potential, photoconductor characteristics, etc. Since the main factor in the toning and transfer process is the electrostatic force mechanism, a larger potential difference created between the pixels is advantageous to stabilize the developing dot and provide an easier transfer.

Experimentation has indicated that a 3 to 6 exposure level difference stabilizes the developed dots. Also, the difference of the exposure level may vary with respect to exposures so that a larger difference of exposure is set at lower exposures. For example, if the mean exposure is at level 3 or 4, the controlled pixels should be adjusted to exposure level 9 or 10. However, when the mean exposure is at level 9 or 10 the controlled pixels should be adjusted only to exposure level 11 or 12.

As the error diffusion process continues, in step 54, the further introduced error on that specific (the current) pixel will then be distributed to its neighborhood pixels to balance the specific pixel. Since this adjustment will not change the total tone value but redistributes it as the error diffusion does, the imbedded dot structure is carried naturally in the gray scale error diffusion image. This added dot structure provides a stabilized center on the latent image and improves the toning development process in the electrophotographic printing.

Similarly, this imbedded controlled dot structure can be utilized to the partial dot structure described earlier or other dot structures without a stable dot center in the image.

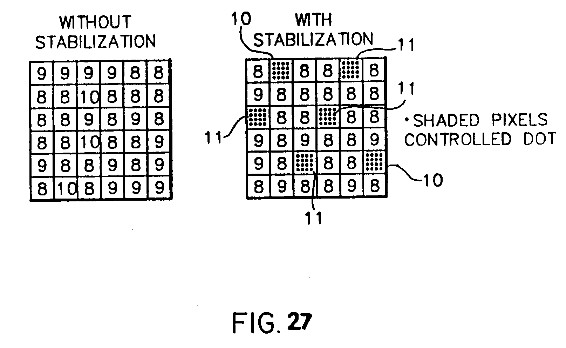

An example of a 6x6 cell subjected to gray scale error diffusion according to the present invention is illustrated in Figure 27. The shaded pixels, with higher exposure levels, are the controlled pixels that are to be stabilized. In the 6x6 cell shown on the left without stabilization, there are no large exposure differences among the pixels. The exposure at each pixel is scattered among levels 8, 9 and 10, so that there is no well formed structure in the cell.

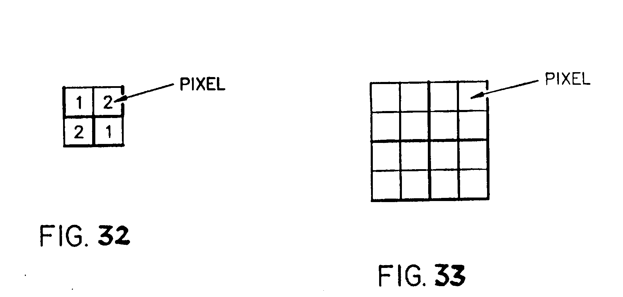

By contrast, the cell on the right of Figure 31 after dot stabilization provides a stable dot structure for developing the flat field, and appears as a screen imposed on top of the 6x6 cell.

In accordance with still another embodiment of the invention, a method and an apparatus is provided for reproducing an original image that has one or more different image type regions. A controller operates a gray level printer in a default mode when the original image contains a text region or a halftone region. This default mode includes either contour suppression applied to every pixel of the original image or uses an output screen that is a higher frequency than the frequency of a screen of the original image.

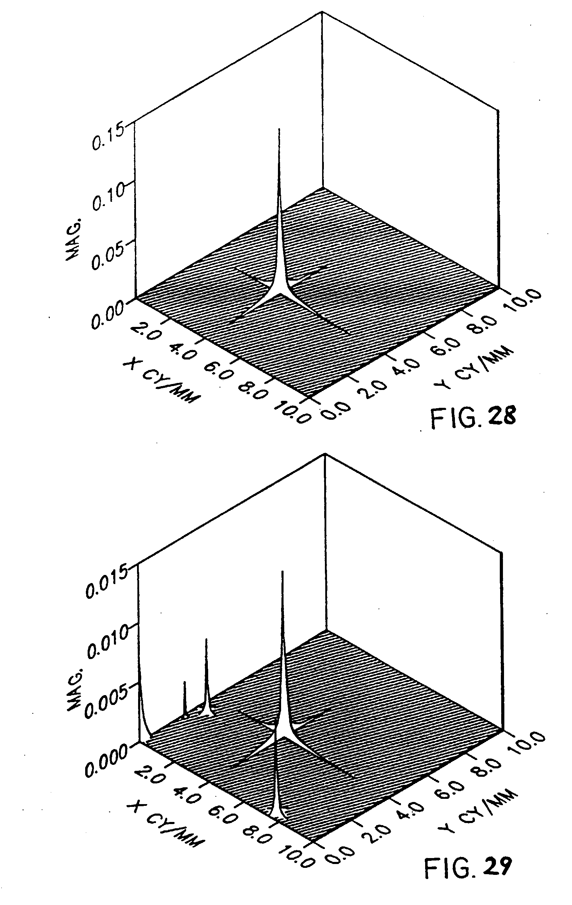

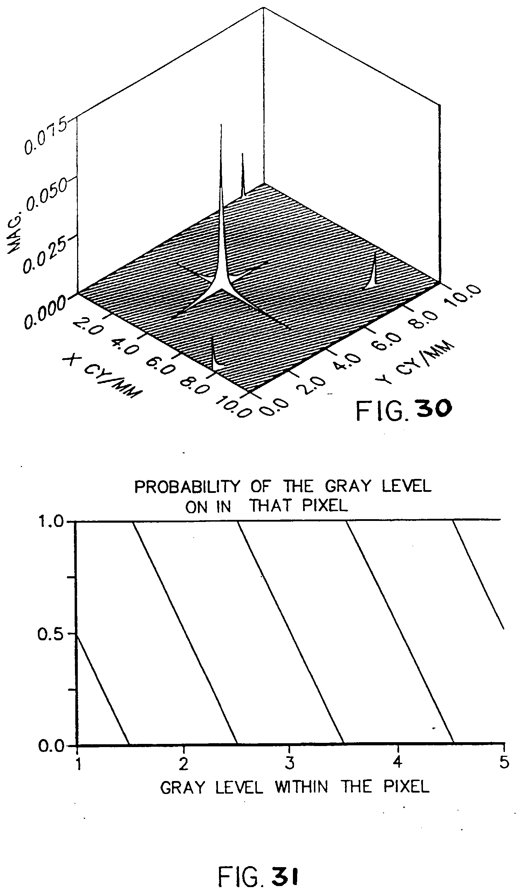

With photographic input and digital scanning at 400 dpi, successful gray level halftones at 141/inch screen (45 degree) of the mixed dot type may be produced to represent output images with a gray level printing system at 400 dpi output resolution. The gray level halftone is tuned to balance between the visibility of the fundamental screen and the granularity of the system for a particular process. In this an exemplary embodiment, 12 microns toner with electrostatic transfer is used. A power spectrum of an output print of a 0.8 black density patch with full dot type is shown in Figure 28. As one can see, the fundamental frequency at 141/inch screen is very prominent but the granularity is low. At the other extreme, the power spectrum of an output density patch (at a similar density to the full dot) of a partial dot type is shown in Figure 29. In this figure, the fundamental frequency is no longer very prominent, yet granularity is higher (due to a change in the plotting scale, it is difficult to see the granularity change, but this change is indicated by the data). A compromise is made with the mixed dot halftone as shown in the power spectrum of Figure 30 which has a significant reduction of the fundamental frequency and yet is very similar in granularity to that of the full dot type.

What can be concluded from Figures 28-30 is that for large toner particle size, a fundamental screen frequency is desirable to stabilize the system and reduce granularity. But when reducing the visual sensation for the screen (to make the system more continuous tone like), one wants to have a weaker screen. Also if the input is a halftone screen itself, it is desirable to have a weak output screen (or no screen at all), so as to reduce moire effects.

For continuous tone input, the output images using the mixed dot type with a 141/inch screen (45 degree) exhibit a fine balance between sharpness, granularity and screen texture. However, if the input to the scanner is a halftone (in this case a 150/inch screen picture), then using this output screen (which is good for continuous tone pictorial input) will create a strong moire pattern. Furthermore, if the input is high quality text and graphics, the 141/inch may break up the fine structures and may not be desirable.

Therefore, for digital copying, the situation can be summarized as follows. For photographic continuous tone input, it may be desirable to have a photographic mode which reduces granularity and stabilizes the system with a 141/inch screen. This screen has the advantages of lower grain, higher sharpness, a weak screen and a stable process. The disadvantages include moire patterns with halftone inputs, and broken lines for fine line graphics and text. One may therefore program the controller to provide a default mode for the digital copier which will be able to handle halftone input, text/graphics input and continuous tone input reasonably well. There are many approaches to providing a default mode. One method is segmentation and descreening, which requires extensive pre-processing and text/picture/halftone segmentation in real time. A second method uses gray level error diffusion and provides high resolution scanning and no more for halftone input.

This aspect of the present invention provides two different methods for providing a default mode that produces satisfactory images for each of the different image types. The first of these is termed "contour suppression/pixel" and the second is termed "higher screen frequency".

The contour suppression/pixel method of providing a default mode is shown in Figure 31. In this method, contour suppression is applied to every input pixel. For example, assume that there are 16 gray levels (4 bits) within one pixel and the input data value is just at gray level 3. Then gray level 3 will have a 50% probability to be on, but gray levels 4 to 16 will have a 100% probability to be on and gray levels 1 and 2 will have a 0% probability to be on. When a halftone input (150/inch screen) is used in this case with a 400 dpi gray level writer, the moire is reduced significantly. Here the original halftone is in fact stabilizing tone reproduction with this per pixel contour suppression method.

The contour suppression/pixel method will be further explained with an example below. The generation of a threshold mask has been described with regard to the 4-bit mixed dot type thresholding mask illustrated in Figure 9. This thresholding mask is derived from a dot layout, such as shown in Figure 8 for the mixed dot type, using a tone reproduction control chart, such as shown in Figure 12. Assume, for example, that the input image pixel at location (1,1) of the 4x4 matrix cell of Figure 9 has a gray value of 56. The 15 thresholding values at the (1,1) location of the 4x4 cell are:
71, 69, 66, 64, 61, 59, 57, 54, 51, 50, 49, 19, 12, and 9.

Since the input image pixel has a gray value of 56, which is between the two threshold values 57 and 54, the output gray level 7 would be given to that pixel in the method previously described. Hence, that input image pixel with value 56 at location (1,1) will have a probability of gray level 7 being on of 100%. Similarly, the same output gray level 7 would also be given to an image input pixel with a gray value of 55 using the method previously described. In the present aspect of the invention, however, contour suppression does not involve assigning 100% probability to all pixel values in between the thresholds. Instead, the probability is made proportional to the difference of the pixel value relative to the thresholds. For example, the value 56 will not have gray output level 7 all of the time. If the probability is set to 80%, then this pixel will be output with gray level 7 80% of the time, and with gray level 8 20% of the time.

This method of contour suppression, which does not fix the probability of a specific gray level being on at 100% for values between thresholds, but rather makes it a function of the difference of the pixel value relative to the thresholds, delivers more accurate tone and eliminates false contouring due to large differences between threshold values.

The contour suppression/pixel method used on scanned in text also shows high resolution. Therefore the system should be able to preserve images whether it is a halftone input or high resolution text/graphics input and has been going through the copying process more than once (recopying). However, if the method is used on continuous tone input, the output can be grainy. In this case, the contour suppression scheme does reduce density contouring compared with a straight threshold value matrix in gray level printing. Further improvement includes passing the original image through an 8 bits to 4 bits conversion type of Bayer matrix to give the system more gray levels, thereby eliminating contour suppression.

The second method of the present invention uses a higher output screen such as a 282/inch or 11.10/mm (45 degree screen) shown in Figure 32 or a 200/inch or 7.87/mm (90 degree screen) shown in Figure 33 with gray level printing. As the output screen stays at a frequency far away from some of the more popular magazine type screen frequencies (133/inch, 150/inch), a moire pattern generated due to the frequency beating of the input and output screens will go to a higher frequency. The moire pattern thus generated will therefore be less observable than the moire created by two frequencies that are close to each other, like 141/inch and 150/inch screens. Also, the moire pattern from a halftone input image can be further reduced if the strength of the output screen is lessened (e.g., by a partial dot as in Figure 29 or a mixed dot as in Figure 30). Of course, a balance is made between reducing the moire and the granularity that is generated from a continuous tone image with a certain toner size. In any event, the granularity for these higher screen systems with continuous tone input would still be better than that of just contour suppression on each pixel since a weak screen is provided to stabilize the system. Contour suppression on the halftone may still be necessary for a high screen in order to generate enough gray levels to reduce contouring. Text screening at 282/inch screen has also been shown to be quite satisfactory.

The above two methods provide a default mode for universal color document digital copying in addition to a photographic mode which can produce very good output with photographic input. Namely, the default mode will preserve text/graphics, halftone with the least moire and reasonable photographic pictorial inputs. Although the default mode can reproduce photographic input reasonably well, it is preferred that this default mode be supplemented by a photographic mode which deals with continuous tone input very well.

Although the invention has been described and illustrated in detail, it is to be clearly understood that the same is by way of illustration and example, and is not to be taken by way of limitation. The scope of the present invention are to be limited only by the terms of the appended claims.

## Claims

1. A method of producing a halftoned gray level image, comprising:
- controlling a gray level printer such that the printer forms dots of variable dot-sizes on a recording medium at plural pixel locations, the pixel locations being grouped into cells (28, 30, 32, 34) having cell gray levels, wherein a characteristic of the dots of a cell are determined such that for each increase in cell gray level, a dot at at least one of said pixel locations in the cell forms a larger dot-size; and characterized in that
- the sizes of dots at the pixel locations in the cell grow in accordance with an order such that each dot is formed to a first dot-size, larger than a minimum dot-size and less than a maximum dot-size before beginning the formation of a dot at another pixel location within the cell.

2. The method of claim 1 and wherein all of the dots have been formed to the first dot-size corresponding to a specific cell gray level, providing further sequential increases in cell gray levels by correspondingly sequentially increasing the dot-size of each of the dots to a second dot size, to provide corresponding increases in cell gray levels by distributing said increases successively to different pixel locations in the cell.

3. The method of claim 2 and including:
- collecting statistical information of dot regions from a digitized image signal and for each dot region of the digitized image signal,
- selecting a dot type to render that cell dot region in accordance with the statistical information, the cell dot type being selected from either a mixed dot type or a different dot type than said mixed dot type.

4. The method of claim 1 including
- scanning an original image into pixels having determined pixel values;
- comparing said pixel values to a set of thresholding values that are defined by a 4-quadrant tone reproduction analysis using a dot template, selected bit depth and dot type structure;
- producing a first signal corresponding to a gray level halftoned representation of the digitized image using the thresholding values; and
- printing from the first signal a gray level halftoned reproduction of the original image.

5. The method of any of the claims 1 - 4 and including the step of printing with an electrophotographic printing process.

6. An apparatus for reproducing an original image, comprising:
- a scanner (12) which scans and digitizes the original image into pixels;
- a controller means (16) coupled to the scanner (12) to receive the digitized original image, and which produces a first signal corresponding to a gray level halftoned representation of the digitized original image; and
- a printer (18) coupled to the controller (16) to receive said first signal and which produces a gray level halftoned reproduction of the original image;
- wherein the controller means (16) groups the pixels into cells (28, 30, 32, 34) that each have a determined cell gray level, and controls the formation of dots of variable dot-sizes at the pixel locations within an individual cell by the printer (18) such that for each increase in cell gray level, a dot at at least one of said pixel locations in the cell is formed such that it has a larger dot size, characterized in that
- the controller means (16) controls cell gray levels so that sequential forming of dots occurs at the pixel locations in the cell in an order such that each dot is formed to a first dot-size, larger than a minimum dot size but less than a maximum dot-size, before beginning the formation of a dot at another pixel location within the cell, and when all of the pixel locations in the cell have been formed to the first dot-size corresponding to a specific cell gray level, there is provided further sequential increases in cell gray levels by correspondingly sequentially increasing the dot-size of each of the dots in said cell to a second dot-size, to provide progressive corresponding increases in cell gray levels by distributing said increases successively to different pixel locations in the cell.

7. The apparatus according to claim 6 wherein the controller means (16) includes means for obtaining a set of thresholding values at each pixel location from a specified set of gray dot patterns by 4-quadrant tone reproduction analysis.

8. The apparatus according to claim 7 and wherein the controller means (16) includes means for operating the printer (18) in a first mode when the original image contains a text region or a halftone region, said first mode including contour suppression applied to every pixel of said original image.

9. The apparatus of any of the claims 6 through 8 and wherein the printer includes means for printing with an electrophotographic printing process.

## Patentansprüche

1. Verfahren zum Erzeugen eines gerasterten Graustufenbildes mit folgendem Schritt:
- Steuern eines Graustufen-Druckkopfes derart, daß der Druckkopf Punkte veränderlicher Größe an mehreren Pixelstellen eines Aufzeichnungsmediums bildet, wobei die Pixelstellen zu Zellen (28, 30, 32, 34) mit Zellen-Graustufen zusammengefaßt werden, und wobei die Charakteristik der Punkte einer Zelle so festgelegt ist, daß bei jeder Vergrößerung des Grauwertes der Zelle ein Punkt an zumindest einem der Pixel in der Zelle eine größere Punktgröße bildet,
**dadurch gekennzeichnet,** daß
- die Größe der Punkte an den Pixeln in der Zelle nach einer festgelegten Reihenfolge so anwächst, daß jeder Punkt zu einer ersten Punktgröße geformt wird, die eine Minimal-Punktgröße übersteigt und unter einer Maximal-Punktgröße liegt, ehe die Bildung eines Punktes an einer weiteren Pixelstelle innerhalb der Zelle beginnt.

2. Verfahren nach Anspruch 1, dadurch gekennzeichnet, daß nach Bildung aller Punkte entsprechend einer spezifischen Zellen-Graustufe zu einer ersten Punktgröße weitere sequentielle Anhebungen der Zellen-Graustufen durch eine entsprechende sequentielle Erhöhung der Punktgröße jedes der Punkte auf eine zweite Punktgröße erfolgt, um entsprechende Anhebungen der Zellen-Graustufen durch aufeinanderfolgendes Verteilen dieser Anhebungen auf verschiedene Pixel in der Zelle zu erreichen.

3. Verfahren nach Anspruch 2, gekennzeichnet durch folgende Schritte:
- Sammeln statistischer Information über Punktbereiche von einem digitalisierten Bildsignal und für jeden Punktbereich des digitalisierten Bildsignals,
- Auswählen einer Punktart, um den Zellen-Punktbereich entsprechend der statistischen Information wiederzugeben, wobei die Zellenpunktart entweder aus einer gemischten Punktart oder einer von der gemischten Punktart verschiedenen Punktart ausgewählt wird.

4. Verfahren nach Anspruch 1, gekennzeichnet durch folgende Schritte:
- Abtasten und Zerlegen eines Originalbildes in Pixel mit bestimmten Pixelwerten;
- Vergleichen der Pixelwerte mit einer Gruppe von Schwellenwerten, die durch eine 4-Quadranten-Tonwiedergabe-Analyse definiert ist, bei welcher eine Punktschablone, eine ausgewählte Bit-Tiefe und eine Punktart-Struktur verwendet werden;
- Erzeugen eines ersten Signals, welches einer gerasterten Graustufendarstellung des digitalisierten Bildes unter Verwendung der Schwellenwerte entspricht; und
- Drucken einer gerasterten Graustufen-Wiedergabe des Originalbildes, gemäß dem ersten Signal.

5. Verfahren nach einem der Ansprüche 1 - 4, gekennzeichnet durch folgenden Schritt:
- Drucken nach einem elektrofotografischen Druckverfahren.

6. Vorrichtung zum Reproduzieren eines Originalbildes mit folgenden Komponenten:
- einem Scanner (12), der das Originalbild abtastet und in Pixel digitalisiert;
- einer Steuerungseinrichtung (16), welche mit dem Scanner(12) gekoppelt ist und das digitalisierte Originalbild empfängt und ein erstes Signal erzeugt, das einer gerasterten Graustufen-Darstellung des digitalisierten Originalbildes entspricht;
- wobei die Steuerungseinrichtung (16) die Pixel zu Zellen (28, 30, 32, 34) zusammenfaßt, die jeweils eine bestimmte Zellen-Graustufe aufweisen, und in den Pixelstellen innerhalb einer einzelnen Zelle durch den Drucker (18) die Bildung von Punkten veränderlicher Größe steuert, so daß bei jedem Anstieg der Zellen-Graustufe an zumindest einem der Pixel in der Zelle ein Punkt gebildet wird, der eine größere Punktgröße aufweist,
**dadurch gekennzeichnet,** daß
- die Steuerungseinrichtung (16) die Zellen-Graustufen so steuert, daß die sequentielle Bildung von Punkten an den Pixeln der Zelle gemäß einer Reihenfolge so erfolgt, daß jeder Punkt zu einer ersten Punktgröße geformt wird, die eine Minimal-Punktgröße übersteigt und unter einer Maximal-Punktgröße liegt, ehe die Bildung eines Punktes an einer weiteren Pixelstelle innerhalb der Zelle beginnt, und daß nach Bildung aller Punkte der Zelle entsprechend einer spezifischen Zellen-Graustufe zu einer ersten Punktgröße weitere sequentielle Anhebungen der Zellen-Graustufen durch entsprechende sequentielle Erhöhung der Punktgröße jedes der Punkte in der Zelle auf eine zweite Punktgröße erfolgt, um progressive, entsprechende Anhebungen der Zellen-Graustufen durch aufeinanderfolgendes Verteilen dieser Anhebungen auf verschiedene Pixel in der Zelle zu erreichen.

7. Vorrichtung nach Anspruch 6, dadurch gekennzeichnet, daß die Steuerungseinrichtung (16) ein Mittel zur Bildung einer Gruppe von Schwellenwerten für jedes Pixel aufweist, aus einer spezifizierten Gruppe von Graupunktmustern mittels einer 4-Quadranten-Tonwiedergabe-Analyse.

8. Vorrichtung nach Anspruch 7, dadurch gekennzeichnet, daß die Steuerungseinrichtung (16) ein Mittel zum Betreiben des Druckers (18) in einer ersten Betriebsart aufweist, wenn das Originalbild einen Textbereich oder einen gerasterten Bereich enthält, wobei die erste Betriebsart eine Konturenunterdrückung aufweist, die bei jedem Pixel des Originalbildes angewandt wird.

9. Vorrichtung nach einem der Ansprüche 6 - 8, dadurch gekennzeichnet, daß der Drucker eine Einrichtung zum Drucken nach einem elektrofotografischen Druckverfahren aufweist.

## Revendications

1. Procédé de production d'une image tramée à niveaux de gris, comprenant :
- la commande d'un dispositif d'impression à niveaux de gris telle que le dispositif d'impression forme des points à tailles de points variables sur un support d'enregistrement à plusieurs emplacements de pixels, les emplacements de pixels étant regroupés par cellules (28, 30, 32, 34) présentant des niveaux de gris de cellule, dans lequel une caractéristique des points d'une cellule est déterminée de telle manière que pour chaque augmentation du niveau de gris de la cellule, un point à au moins l'un desdits emplacements de pixels de la cellule forme une taille de points plus grande, et
caractérisé en ce que
- les tailles des points aux emplacements des pixels de la cellule croissent conformément à un ordre tel que chaque point soit formé à une première taille de points, plus grande qu'une taille de points minimum et inférieure à une taille de points maximum avant de commencer la formation d'un point à un autre emplacement de pixels à l'intérieur de la cellule.

2. Procédé selon la revendication 1 et dans lequel tous les points ont été formés à la première taille de points correspondant à un niveau de gris de cellule spécifique, prévoyant en outre des augmentations séquentielles des niveaux de gris de cellule en augmentant séquentiellement de façon correspondante la taille de points de chacun des points jusqu'à une seconde taille de points, afin d'obtenir des augmentations correspondantes des niveaux de gris de cellule en répartissant lesdites augmentations successivement vers différents emplacements de pixels de la cellule.

3. Procédé selon la revendication 2 et comprenant :
- le recueil d'informations statistiques des régions des points à partir d'un signal d'image numérisé et pour chaque région de point du signal d'image numérisé,
- la sélection d'un type de point pour obtenir le rendu de cette région de point de cellule conforme aux informations statistiques, le type de point de cellule étant sélectionné soit à partir d'un type de point mixte, soit à partir d'un type de point différent dudit type de point mixte.

4. Procédé selon la revendication 1 comprenant
- le balayage d'une image d'un original en pixels présentant des valeurs de pixels prédéterminées,
- la comparaison desdites valeurs de pixels à un ensemble de valeurs d'application de seuil qui sont définies par une analyse de reproduction de tons à quatre quadrants en utilisant un gabarit de point, une profondeur de bit sélectionnée et une structure de type de point,
- la production d'un premier signal correspondant à une représentation tramée à niveaux de gris de l'image numérisée en utilisant les valeurs d'application de seuil, et
- l'impression à partir du premier signal d'une reproduction tramée à niveaux de gris de l'image de l'original.

5. Procédé selon l'une quelconque des revendications 1 à 4 et comprenant l'étape consistant à imprimer avec un procédé d'impression électrophotographique.

6. Appareil destiné à reproduire une image d'un original, comprenant :
- un dispositif de balayage (12) qui balaye et numérise l'image de l'original en pixels,
- un contrôleur (16) relié au dispositif de balayage (12) afin de recevoir l'image numérisée de l'original, et qui produit un premier signal correspondant à une représentation tramée à niveaux de gris de l'image numérisée de l'original, et
- un dispositif d'impression (18) relié au contrôleur (16) afin de recevoir ledit premier signal et qui produit une reproduction tramée à niveaux de gris de l'image de l'original,
- dans lequel le contrôleur (16) regroupe les pixels en cellules (28, 30, 32, 34) qui présentent chacune un niveau de gris de cellule déterminé, et commande la formation de points à tailles de points variables aux emplacements de pixels à l'intérieur des pixels d'une cellule individuelle grâce au dispositif d'impression (18) de sorte que pour chaque augmentation du niveau de gris de la cellule, un point d'au moins l'un desdits emplacements de pixels de la cellule soit formé de telle sorte qu'il présente une taille de points plus grande, caractérisé en ce que
- le contrôleur (16) commande les niveaux de gris de la cellule de façon à ce qu'une formation séquentielle de points apparaisse aux emplacements de pixels de la cellule dans un ordre tel que chaque point soit formé à une première taille de points, plus grande qu'une taille de points minimum mais inférieure à une taille de points maximum, avant de commencer la formation d'un point à un autre emplacement de pixel à l'intérieur de la cellule, et lorsque tous les emplacements de pixels de la cellule ont été formés à la première taille de points correspondant à un niveau de gris de cellule spécifique, il est prévu d'autres augmentations séquentielles des niveaux de gris de cellule en augmentant séquentiellement de façon correspondante la taille de points de chacun des points de ladite cellule à une seconde taille de points, afin de permettre des augmentations progressives correspondantes des niveaux de gris de cellule en répartissant lesdites augmentations successivement vers différents emplacements de pixels dans la cellule.

7. Appareil selon la revendication 6 dans lequel le contrôleur (16) comprend un moyen destiné à obtenir un ensemble de valeurs d'application de seuil à chaque emplacement de pixel à partir d'un ensemble spécifié de motifs de points de gris grâce à une analyse de reproduction de tons à quatre quadrants.

8. Appareil selon la revendication 7 et dans lequel le contrôleur (16) comprend un moyen destiné à mettre en oeuvre le dispositif d'impression (18) dans un premier mode lorsque l'image de l'original comprend une région de texte ou une région de trame, ledit premier mode comprenant une suppression de contour appliquée à chaque pixel de ladite image de l'original.

9. Appareil selon l'une quelconque des revendications 6 à 8 et dans lequel le dispositif d'impression comprend un moyen destiné à imprimer avec un procédé d'impression électrophotographique.
